Europäisches Patentamt

European Patent Office

Office européen des brevets

(11) Publication number: **0 604 650 A1**

(12) **EUROPEAN PATENT APPLICATION**
published in accordance with Art.
158(3) EPC

(21) Application number: **92906200.8**

(22) Date of filing: **26.02.92**

(86) International application number:
**PCT/JP92/00228**

(87) International publication number:
**WO 93/16882 (02.09.93 93/21)**

(51) Int. Cl.5: **B41J 29/00,** B41J 29/38,
G06F 3/12, G06K 17/00

(43) Date of publication of application:
**06.07.94 Bulletin 94/27**

(84) Designated Contracting States:
**DE FR GB IT**

(71) Applicant: **SEIKO EPSON CORPORATION**
**4-1, Nishishinjuku 2-chome**
**Shinjuku-ku Tokyo 160(JP)**

(72) Inventor: **WAKABAYASHI, Ken-ichi**
**Seiko Epson Corporation,**
**3-5, Owa 3-chome**
**Suwa-shi, Nagano-ken 392(JP)**
Inventor: **TAKAYAMA, Chitoshi**
**Seiko Epson Corporation,**
**3-5, Owa 3-chome**
**Suwa-shi, Nagano-ken 392(JP)**
Inventor: **SHIOZAKI, Tadashi**
**Seiko Epson Corporation,**
**3-5,Owaa 3-chome**
**Suwa-shi, Nagano-ken 392(JP)**

(74) Representative: **Hoffmann, Eckart et al**
**Patentanwalt,**
**Blumbach & Partner,**
**Bahnhofstrasse 103**
**D-82166 Gräfelfing (DE)**

(54) **ADDITIONAL ELECTRONIC DEVICE AND ELECTRONIC SYSTEM.**

(57) On a printed board (550) of a cartridge (503) are arranged a microprocessor (601), a ROM storing a processing program for the microprocessor (601), and a ROM storing a processing program for a processor in a printer body. When the cartridge (503) is inserted in the printer body, the processor in the printer body reads discrimination data stored in the ROM in the cartridge, and the processor in the printer body performs the processing according to the predetermined processing program in response to the discrimination data. The microprocessor (601) is arranged at the rear end of the cartridge when inserted so that it can effectively dissipate heat outside.

Rank Xerox (UK) Business Services
(3.10/3.09/3.3.4)

**FIG._1**

Technology Fields

This invention concerns an add-on electronic device that is equipped with a processor and an electronic system that contains the said add-on electronic device, especially its cooling means.

Background Technologies

In recent years, electronic equipment that is based on digital operations, such as, personal computers, word processors, work stations, and equipment that has a built-in microprocessor, such as printers, facsimile machines, electronic memos, electronic musical instruments, electronic cooking equipment, and electronic cameras, are being used within a wide area of society. In addition, other equipment that makes use of the microprocessor, automobiles, robots, numerical control machines and other varieties of electrified products are being widely used.

For such digitally operated logic based equipment, it is possible to have flexible control, compared to the simple feed back control realized with hardware only. In addition, there is the advantage of being able to essentially change the functions by changing the software. As a result, it is possible to realize a totally different control by merely modifying the content of the ROM that stores the processing steps, even for the same piece of hardware. Moreover, there is the advantage of being able to upgrade the version of the functions by modifying the software only.

However, the capability of the processor that carries out the actual control is determined by, for example, the number of processing steps per unit of time, the number of bits that can be handled at one time, and the width of the bus that transfers the data. As a result, the things that can be improved upon by merely upgrading the software version are at best limited to improving the ease of use. In reality, it was not possible to make a large improvement in the exiting electronic equipment. Also, improving a software version by modifying the software required replacing the ROM in order to modify the software. It is often the case that the software was stored on the ROM, and this often made things difficult. As a result, improving the software version was hard to do unless the model was scheduled for a ROM exchange at the time the design began, or unless the software was supplied on a replaceable medium such as a flexible disk.

From the beginning there were things such as the so-called accelerator for improving the overall functions of the computer by completely replacing a device, such as the microprocessor, in a machine such as a personal computer. However, this required replacing the CPU located on the mother board, which is not something that everybody can do easily. However, when it comes to consumer electronic equipment such as printers, facsimile machines, electronic memos, electronic musical instruments, electronic cooking equipment and electronic cameras, or industrial electronic equipment such as automobile parts, robots, numerical control machines, and a variety of other electrified equipment, it is common for absolutely no consideration to be given to such improvements and changes in functions. This problem will be described in detail using the page printer as an example.

In recent years, there has been a remarkable dissemination of page printers, such as the laser printer. The main current will become high-speed output equipment for data from computers. In the case of the laser printer, the resolution is from 240 DPI to 800 DPI, and products have been developed that have the printing capability to turn out several pages a minute. Such printers use a xerography unit, which uses a photo-sensitive drum as the printing engine. Because the processing steps, that is, electrostatic charge, exposure, toner application and transfer, take place continuously synchronized with the photo-sensitive drum, print processing takes place after one page of images has been stored in memory.

As a consequence, the image development memory provided in a page printer requires the capacity to store at least one page of images in memory. If compression of the image data does not take place, the capacity will be determined by the resolution and the size of the page that can be processed. For example, if we consider a case in which the resolution is 300 DPI and the size of the page is 8 inches horizontally and 10 inches vertically, it means the printer will handle a total of 8x10x300x300 = 7,200,000 dot pixels. This means that at least 0.9 megabytes of memory have to be provided.

Moreover, if the print data received from an external computer is a bit image of the image to be printed, the printer need only accept this data and perform processing that will store this data in sequence in the memory. The processing speed will chiefly depend on the data transfer speed. Because parallel transfer, for example, a transfer system that complies with the Centronics standard, is very fast, it is almost unthinkable that the transfer speed will be slower than the printing capability of the xerographic drum.

However, for a printer with the capability of receiving data such as the character code, the line and the line position pitch and then developing this as an image, or for a printer that receives a program that is described in a page description language and then interprets and develops it, arithmetic processing and the generation of bit images based on the print data are required. Compared to transferring a simple bit image, there is a major reduction in overall processing speed. That is, the processing speed of the printer is determined chiefly by things such as the ability of the processor that performs the processing and the memory access time. Compared to that of the xerography unit itself, this causes a major reduction in the printing capability.

For example, when considering a page printer with the capability of printing ten pages a minute, a mere six seconds are allowed in which to prepare the image data for one page of printing. If an attempt is made to develop all of the 0.9 megabytes of data in this time span, the amount of processing time per byte would be a mere 6.67 micro seconds (6 seconds divided by 0.9 megabytes). The processing time is at a level where it may or may not be possible to be realized with the high-speed RISC type processors currently on the market. In contrast to this, it is often the case that the xerography unit already has the ability to print ten pages per minute. As a result, under the current circumstances, the processing capability of the control unit that processes the print data is the stumbling block in improving the overall printing speed.

Among the page printers are those provided with an internal memory expansion capability and those provided in advance with a expansion slot. By inserting a cartridge here which contains fonts or a program, the functions can be expanded. However, even if the processing speed can be increased using the memory expansion, it is not possible to improve on the processing performance itself. For example, for a laser printer that only supports a particular page description language, it is common knowledge that other page language interpreter programs are available in the form of IC cards and other cartridges. These expand the functions that process other page description languages. This cartridge stores the program in mask ROM form, and it is inserted into the expansion slot of the printer.

The cartridge, which offers a page language interpreter program, will be described. The control unit of the printer unit reads the specified address assigned to the cartridge after the power is turned on. If a cartridge containing a page description language program has been inserted, a specified code will be returned and this will tell the control unit that the cartridge has a page language program. By doing this, the control of the printer will switch to the interpreter program located inside of the cartridge. As a result, the printer will be able to interpret data received from the outside based on that page language. This itself will not increase the processing speed. Rather, it is often the case that the overall printing speed will decrease as a result of employing a high level description language.

For this reason, a cartridge equipped with a microprocessor separate from that of the printer unit was invented to resolve the problem described above. The cartridge has the ability to receive print data from the printer. In addition, the microprocessor inside of the cartridge also has the ability to develop the image data based on the print data it received.

However, a microprocessor is an electronic circuit which has from tens of thousands of devices to hundreds of thousands of devices. These devices switch based on clock signals that are from 20 MHz to 40 MHz, or frequencies that are even higher. As a consequence, during operation, the microprocessor generates a great deal of heat. This is the reason the temperature of the microprocessor will increase, generating errors. Moreover, these internal devices will be destroyed if the heat it generates is not dissipated to the outside.

In order to prevent errors and the destruction of the internal microprocessor device, the microprocessor casing is designed for a maximum temperature of 80° C. In order to maintain the surface temperature tolerance of the casing within its tolerances, it is important to devise a cartridge structure that makes it easy to dissipate heat from the microprocessor to the outside.

However, in the prior art, the cartridge that was inserted into the printer did not have a microprocessor. Therefore, a cartridge heat dissipating structure was not known. The problem of a heat dissipating structure for such a cartridge is not limited to cartridges that are inserted into a printer. In general, it is a common problem with the add-on electronic devices that are installed to electronic equipment.

This invention was devised to resolve the problems of the prior art as described above. Its objective is to offer an add-on electronic device and an electronic system containing the said add-on electronic device, which are able to effectively cool the internal circuit devices.

Invention Disclosure

In order to solve the problems described above, this is an invention of an add-on electronic device that is equipped with processor number 1, which is capable of logical operations, equipped with memory means number 1, which stores the processing steps that are executed by the said processor number 1, equipped with a connector that at least connects the address signal line of the said processor number 1, and equipped with an electronic device that has an output address means that represents the data that must be transferred to the outside as an address signal and then outputs the said address signal through the said connector, equipped with processor number 2, which executes different processing from that of processor number 1, equipped with memory means number 2, which stores the processing steps that processor number 2 executes, and equipped with a data removal means that removes the data that is reflected in the said address from the address signal that is output from the said electronic device. Inside of the add-on electronic device, the circuit devices that generate the greatest amount of heat are located in the area from approximately the center to the back end of the add-on electronic device relative to the direction in which the add-on electronic device is inserted.

Because the circuit devices that generate a lot of heat are placed in the area between the center and back end of the add-on electronic device, even in a case in which the add-on electronic device is inserted relatively deeply inside of the electronic device, the circuit devices that generate a lot of heat are in an external area of the electronic device. As a result, these circuit devices can be cooled effectively.

In one embodiment, the circuit devices that generate a lot of heat include processor number 2. As for the add-on electronic device, it is desirable to have a circuit board in which the circuit devices are inside of the add-on electronic device. In addition, it is also desirable to have a casing that accommodates the circuit devices within the add-on electronic device and accommodates the circuit board. Moreover, it is also desirable that the casing at least have one surface that is made of metal. In this way, the heat can be effectively dissipated to the outside through the metal area.

Further, it is especially desirable that the entire casing be made of metal. If the entire casing is made of metal, the thermal conductance rate of the entire casing will increase. Since it will function as a heat sink, it is possible to effectively dissipate the heat of the circuit devices.

Otherwise, the casing may be made of a material that has a thermal conductance rate of about 1W/m • K or more. If the casing is made of a material that has a thermal conductance rate of about 1W/m • K or more, it is relatively easy to dissipate heat to the outside.

It is also desirable to install packing material between the top surface of processor number 2 and the said casing, providing [packing] material that adheres firmly to the said processor number 2 and the said casing. Because the [packing] material will adhere firmly to processor number 2 and the casing, it is possible to reduce the thermal resistance between these. The [packing] material may even be placed between the top surface of the said processor number 2 and the said heat dissipating material. It is especially desirable for the [packing] material to be made of a rubber substance or a liquid substance.

Also, it is desirable to have an elastic component for pushing processor number 2 in the direction of the top of processor number 2 and the opposing said casing. The elastic component will increase the firmness of the adhesion of all of the components from processor number 2 to the casing, allowing a further decrease in the thermal resistance between these.

This elastic component may pass through an opening in the aforementioned circuit board and be mounted between the bottom surface of aforementioned processor number 2 and the aforementioned casing. By doing so, heat can be dissipated on the casing side through the elastic component, allowing even more effective heat dissipation. It is particularly desirable for this elastic component to be made from silicon rubber. Silicon rubber has a high thermal transfer rate and elasticity as well, allowing for further effective heat dissipation.

It is at least desirable to have an opening in the part of the aforementioned casing that is opposite the aforementioned processor number 2. Because air will pass through the opening, it is possible to cool the circuit devices in the add-on electronic device by means of an air convection current. Even in a case in which the casing is made of plastic, it is desirable to at least make an opening in the aforementioned casing area that is opposite the aforementioned processor number 2.

In addition, in order to separate the casing's comparatively large space number 1 and the comparatively small pace number 2, it is best to place the printed circuit board within the aforementioned casing. It is also best to place the aforementioned processor 2 in space number 2. The reason for this is that compared to placing processor number 2 in comparatively small space number 2, it is possible to reduce the air resistance around processor number 2, thereby allowing processor number 2 to be cooled more effectively within the casing.

It is also best for the add-on electronic device to be equipped with an oscillator circuit that provides a clock signal for the specified circuit device within the add-on electronic device and be equipped with a frequency adjusting circuit that detects whether or not the aforementioned specified circuit device is operating within the specified time period and adjusts the frequency of the aforementioned clock signal according to what is detected. In this way, when the specified circuit device is not operating, its volume of heat generation can be reduced.

Ideally, the aforementioned processor number 1 will detect that the aforementioned specified circuit device has not been operating for a specified amount of time and notify the aforementioned frequency adjusting circuit of this. The aforementioned frequency adjusting circuit will adjust the frequency of the aforementioned signal in response to this notification.

In one embodiment, the aforementioned specified circuit devices include the aforementioned microprocessor number 2. Also, the aforementioned frequency adjusting circuit may also be equipped with a circuit that sets the frequency of the aforementioned clock signal to zero. This invention can also be realized as an electronic system that is equipped with both the add-on electronic device and the electronic device described above.

Brief Description of the Drawings

Figure 1 is an exploded angular view showing the cartridge structure of one embodiment of this invention.

Figure 2 is a drawing showing the layout of the devices on the top and the bottom of the printed circuit board.

Figure 3 is a drawing showing the top part of the casing.

Figure 4 is a cross sectional drawing of the cartridge in the assembled condition.

Figure 5 is a drawing that enlarges the microprocessor of the cartridge and shows its major components.

Figure 6 is a drawing that shows the spring component of the lower casing.

Figure 7 is an angular view of the cartridge inserted into printer type number 1.

Figure 8 is an angular view of the cartridge inserted into printer type number 2.

Figure 9 is a cross sectional drawing of the cartridge and the printer frame, with the cartridge inserted into printer type number 1.

Figure 10 is a cross sectional drawing of the cartridge and the printer frame, with the cartridge inserted into printer type number 2.

Figure 11 is a cross sectional drawing showing the microprocessor in the center of the cartridge.

Figure 12 is a drawing of the layout of the devices on the printed circuit board when the microprocessor is installed in the center of the cartridge.

Figure 13 is a drawing showing the equalization circuit of the heat dissipation path that goes through the upper casing.

Figure 14 is a concept drawing showing the temperature measuring points during a temperature rise test.

Figure 15 is a drawing showing a plastic cartridge casing.

Figure 16 is an angular view of the long spring component in the cartridge insertion direction.

Figure 17 is a cross section of the major components of a cartridge using a compressible silicon rubber piece that pushes directly on the microprocessor.

Figure 18 is a block diagram showing the overall structure of the printer and cartridge.

Figure 19 is a drawing that shows the signal line structure in connector CN11.

Figure 20 is a drawing showing the address map of cartridge 503 when viewed from electronic control device 501.

Figure 21 is a drawing showing the address map of cartridge 503 when viewed from microprocessor 601.

Figure 22 is a block diagram showing the internal structure of cartridge 503.

Figure 23 is a schematic showing a structural example of interrupt request register 640.

Figure 24 is a schematic showing the composition of polling command register 643.

Figure 25 is a drawing showing the content of status register 645.

Figure 26 is a schematic showing a structural example of read control circuit 620.

Figure 27 is a flow chart showing the processing of electronic control device 501, which causes the transfer of data using read control circuit 620.

Figure 28 is a drawing that shows the structure of the data inside of ROM 671.

Figure 29 is a flow chart that shows the processing on the cartridge 503 side, which brings about data transfer that uses read control circuit 620.

Figure 30 is a flow chart that shows the processing of electronic control device 501, which transfers data using FIFO control circuit 623.

Figure 31 is a flow chart that shows the processing of cartridge 503, which transfers data using FIFO control circuit 623.

Figure 32 is a schematic showing an example of the structure of double bank control circuit 624.

Figure 33 is a flow chart that shows the processing to start the transfer of data using double bank control circuit 624.

Figure 34 is a flow that shows the response processing in electronic control circuit 501.

Figure 35 is a flow chart that shows the processing of electronic control device 501, which transfers data using double bank control circuit 624.

Figure 36 is a flow chart that shows the processing of cartridge 503, which transfers data using double bank control circuit 624.

Figure 37 is a timing chart that shows the timing of the image data printing that takes place by controlling laser engine 505.

Figure 38 is a block diagram showing the circuit that reduces the operating frequency of the microprocessor.

Explanation of Symbols

| | |
|---|---|
| 1, 1a, 1b | Printer |
| 15. | Xerography unit |
| 34. | Data bus |
| 36. | Bus driver |
| 50. | Cartridge |
| 56. | ROM |
| 68. | Data selector |
| 100, 101 | Upper casing |
| 102. | Heat dissipating silicon rubber piece |
| 104. | Raised area |
| 106. | Surface edge |
| 108. | Indentations |
| 110. | Metal plating |
| 120. | Lower casing |
| 122. | Spring component |
| 123. | Spring component bend |
| 124. | Rivets |
| 126. | Compressible silicon rubber piece |
| 128. | Rubber retainer |
| 130. | Indentations |
| 132. | Rectangular opening |
| 134. | Spring component |
| 136. | Lower casing |
| 140. | Cap |
| 142. | Claws |
| 144. | Opening |
| 160. | Screws |
| 162. | Screws |
| 180. | Metal frame |
| 182. | Metal frame |
| 500. | Printer |
| 501. | Electronic control device |
| 503. | Cartridge |
| 505. | Laser engine |
| 507. | Work station |
| 510. | CPU |
| 511. | ROM |
| 512. | RAM |
| 514. | Data input port |
| 515. | Line buffer |
| 516. | Bus line |
| 517. | Register |
| 518. | Console panel |
| 519. | Console panel I/F |
| 520. | Double buffer circuit |
| 550. | Printed circuit board |

| | |
|---|---|
| 551. | Plug section |
| 601. | Microprocessor |
| 602. | Memory |
| 603. | ASIC |
| 603. | Data transfer controller |
| 606. | ROM |
| 608. | ROM |
| 610. | Selector |
| 610. | Data selector |
| 611. | RAM |
| 615. | Expansion RAM interface |
| 617. | Tri-state buffers |
| 618. | ROM |
| 619. | Tri-state buffers |
| 620. | Read control circuit |
| 621. | FIFO memory |
| 623. | FIFO control circuit |
| 624. | Double bank control circuit |
| 635. | Bus controller |
| 637. | Reset device |
| 640. | Interrupt request register |
| 643. | Command register |
| 645. | Status register |
| 647. | Transfer flag register |
| 649. | PROM control register |
| 650. | Control register |
| 651. | Latch |
| 653. | FIFO register |
| 654. | FIFO write circuit |
| 655. | FIFO read register |
| 657. | Latch |
| 658. | Buffer |
| 661. | Oscillator |
| 665. | Oscillator |
| 670. | EEPROM |
| 671. | ROM |
| 674. | D type flip flop |
| 680. | NAND gate |
| 681. | Data selector |
| 682. | Data selector |
| 684 to 686 | Tri-state buffers |
| 691. | RAM |
| 694, 695 | OR gate |
| 696. | Inverter |
| 1100. | D type flip flop |
| 1104. | D type flip flop |
| 1106. | Data selector |
| 1108. | Counter |
| 1110. | Inverter |
| 1110. | Counter |
| 520A. | RAM |
| 520B. | RAM |
| 520C. | Memory write controller |
| 520D. | Memory read controller |
| 601p. | Pin |
| 640a. | Flip flop |
| 640a. | Interrupt request register |
| 643a. | Octal D type flip flop |

| | | |
|---|---|---|
| 643c. | | D type flip flop |
| 6521. | | Latch |
| 7900. | | Usable gates |
| AAB. | | Address bus |
| CAB. | | Address bus |
| CDB. | | Data bus |
| CN10. | | Connector |
| CN11. | | Connector |
| OP. | | Opening |
| PW. | | Amount of heat generation |
| Ta. | | Ambient temperature |
| Tc. | | Package temperature |
| Tc. | | Top surface temperature |
| $\theta$f. | | Thermal resistance |
| $\theta$t. | | Synthesized thermal resistance |

The Best Mode of Implementing the Invention

The embodiments will be divided up and explained under the following sections.

[i] Cartridge heat dissipating structure
    A. Cartridge structure
    B. Thermal design calculations and temperature rise test results
    C. Examples of modified cartridge structure
[ii] Electrical structure of the printer and cartridge
    A. Overall structure of the printer and the cartridge
    B. Cartridge address space
    C. Cartridge internal structure
    D. Description of data transfer controller 603
    E. Description of all registers
    F. Structure and operation of read control circuit 620
    G. Structure and operation of FIFO control circuit 623
    H. Structure and operation of double bank control circuit 624
    I. Printing of image data
[iii] Miscellaneous

[i] Cartridge heat dissipating structure

A. Cartridge structure

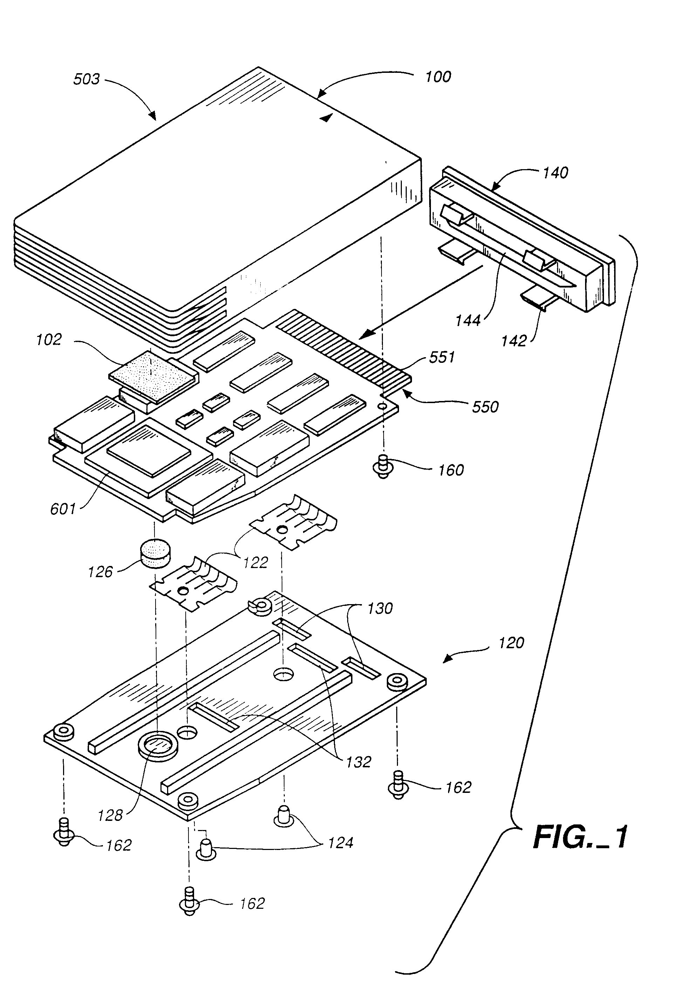

Figure 1 is an exploded angular view showing the structure of the printer cartridge as one embodiment of this invention. This cartridge (503) was designed to be inserted into the cartridge slot used for the fonts of the printer. However, as discussed below, this cartridge has the capability to receive print data from the printer and to develop that print data into image data.

This cartridge (503) internally has a structure in which multiple layer printed circuit board 550 (simply called printed circuit board below) is inserted between the upside down U-shaped upper casing 100 and the U-shaped lower casing 120. On the connector side of printed circuit board 550 cap 140 is in place. On printed circuit board 550, a circuit device, such as microprocessor 601, has been installed. Upper casing 100 and lower casing 120 are both made of aluminum. Because the thermal conductance rate of aluminum is high, it is able to effectively dissipate the heat by conducting the heat from the internal devices to the outside.

On lower casing 120 are two grounding springs (122) that are held in place by rivets 124 in order to obtain grounding contact with the printer unit. In addition, in order to allow the upward pushing of printed circuit board 550, a cylindrical shaped compression silicon rubber piece 126 has been placed on the rubber retainer 128 on the inner surface of the lower casing. Compression silicon rubber piece 126 pushes printed circuit board 550 upward directly beneath microprocessor 601. Sheet heat dissipating silicon rubber piece 102 has been placed between the upper surface of microprocessor 601 and the inner surface of upper casing 100 in order to improve the tightness of the adhesion and thermal conductance. By compression rubber piece 126 pushing printed circuit board 550 upward, microprocessor 601 is also pushed upward,

9

increasing the tightness of the adhesion between microprocessor 601 and heat dissipating silicon rubber piece 102 and also increasing the tight adhesion of heat dissipating silicon rubber piece 102 and the upper casing. As a result, the upward dissipation of heat from microprocessor 601 takes place effectively.

When assembling, first turn upper casing 100 over and place heat dissipating silicon rubber piece 102 in the designated location on upper casing 100. Then, fix printed circuit board 550 in place inside of upper casing 100 using a single screw 160. Then, place lower casing 120 on upper casing 100 and fix it in place by tightening the four screws 162, one in each corner. After that, cartridge 503 will be completed by inserting cap 140 in the cap opening that is formed between upper casing 100 and lower casing 120.

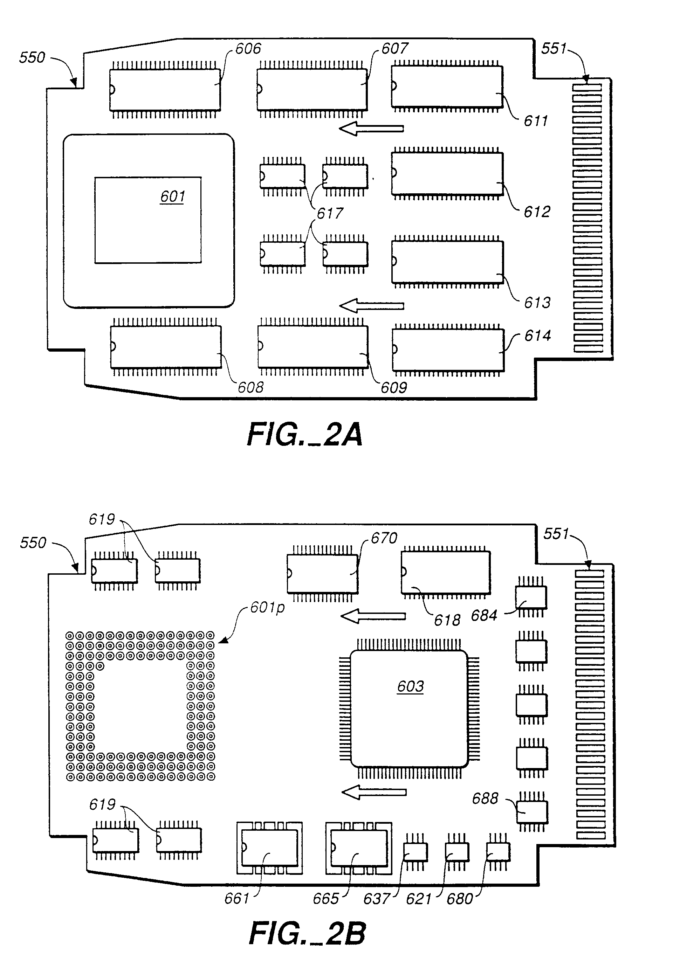

Figure 2 (A) is a drawing that shows the upper surface of printed circuit board 550. (B) is a drawing that shows the bottom surface of printed circuit board 550.

As shown in Figure 2 (A), microprocessor 601 has been attached to one end of printed circuit board 550. At the other end has been placed plug 551, which has a number of electrodes arranged in parallel in order to connect to the connector on the printer unit.

Close to microprocessor 601 and on either side of printed circuit board 550 are two ROMs each, numbers 606 to 609, which store the control program, etc., of microprocessor 601. In the center of printed circuit board 550 are four tri-state buffers, number 617, that are adjacent to microprocessor 601 laid out in a square configuration. Between ROMs 606 to 609 and plug section 551 and between tri-state buffers 617 and plug section 551 are four dynamic RAMs, numbers 611 to 614, which are laid out parallel to each other. For the convenience of illustration, the wiring pattern on the top surface of printed circuit board 550 has been omitted.

Microprocessor 601 is a pin grid array (PGA) type of device. In addition, there are the SOJ type, SOP type and QFP type of devices. Microprocessor 601 uses, for example, the Am29030 (clock speed of 25 MHz), which is a RISC processor manufactured by AMD.

As shown in Figure 2 (B), plug section 551 has been formed on the bottom surface of printed circuit board 550 as well. On the other end of the bottom surface, protrude the pins, number 601p, of microprocessor 601. On either side of microprocessor 601 are two pairs of tri-state buffers, number 619. In the center of printed circuit board 550 and more toward plug section 551 is ASIC 603 (an application specific LSI device), which contains things such as the control circuits and registers for microprocessor 601.

Close to ASIC 603 and on the side of printed circuit board 550 is EEPROM 670, which stores the configuration of the printer (parameters related to the print operation, such as number of printed pages, size of the paper, margins, fonts, communications parameters). Adjacent to EEPROM 670 is ROM 618, which stores the program for operating the microprocessor in the printer.

On the opposite end of printed circuit board 550, two oscillators have been installed, numbers 661 and 665. Oscillator number 1 (661) is the circuit that generates the signal that is the basis of the clock signal for microprocessor 601. For example, it will transmit a 50 MHz clock signal. Oscillator number 2 (665) is the circuit that transmits the clock signal that is used in the interval timer processing area, which will be described later. For example, it will transmit a 5 MHz clock signal. If an oscillator dedicated to microprocessor 601 is provided in this manner, there is the benefit of being able to easily change the frequency of microprocessor 601 by simply replacing oscillator 661.

Adjacent to oscillator 665 and aligned along the edge of printed circuit board 550 are reset device 637, FIFO memory 621, and NAND gate 680. Also, there are five tri-state buffers, numbers 684 to 688, which are parallel to plug section 551.

As shown in Figure 2, the rectangular devices are aligned in the length-wise direction on both the top surface and the bottom surface of printed circuit board 550. As indicated by the arrows, this type of layout allows an easy flow of air from plug 551 toward the direction of microprocessor 601, contributing to the cooling of microprocessor 601.

As stated above, this cartridge, number 503, is inserted into the cartridge slot for the printer font. A common font cartridge merely holds a ROM that stores the font data. In contrast to this, the feature of font cartridge 503 of this embodiment is that it contains the control circuitry, microprocessor 601, ROMs 606 to 609, which store the processing programs of microprocessor 601, ROM 618, which stores the processing programs for the processor within the printer, and ASIC 603.

The printer connector into which this cartridge 503 will be inserted is configured with the specifications for connection to a font cartridge. Therefore, it has been provided with a read only line for reading data from the cartridge to the printer. It does not have a signal line for transferring data from the printer to the cartridge. However, in cartridge 503 of this embodiment is a function that receives print data from the printer and develops this data into image data using microprocessor 601. At such a time, it is necessary to transfer print data from the printer to the cartridge using the read only line in the connector. As a result, as will be shown, special processing is executed for the microprocessor located in the printer.

When cartridge 503 is inserted in the printer, the processor inside of the printer will read the identification data stored in ROM 618 when the printer is started up. In response to this identification data, the processor located in the printer will begin processing according to the processing programs in ROM 618.

The processor inside of the printer will execute special processing according to the programs in ROM 618. This special processing is the generation of an address that will essentially contain one byte of print data (page description language program) and then putting this address on the address bus and communicating this from the printer to cartridge 503. ASIC 603 of the cartridge will receive this address and extract the one byte of print data in which the address is contained by deciphering this and storing it in RAMs 611 to 614. For microprocessor 601, it is better to use a processor that is faster than the printer. By doing so, the image development processing that the printer must execute will take place using high-speed microprocessor 601. Therefore, in essence the processing speed of the printer is able to increase. The circuitry inside of cartridge 503 and its operation will be described in detail later.

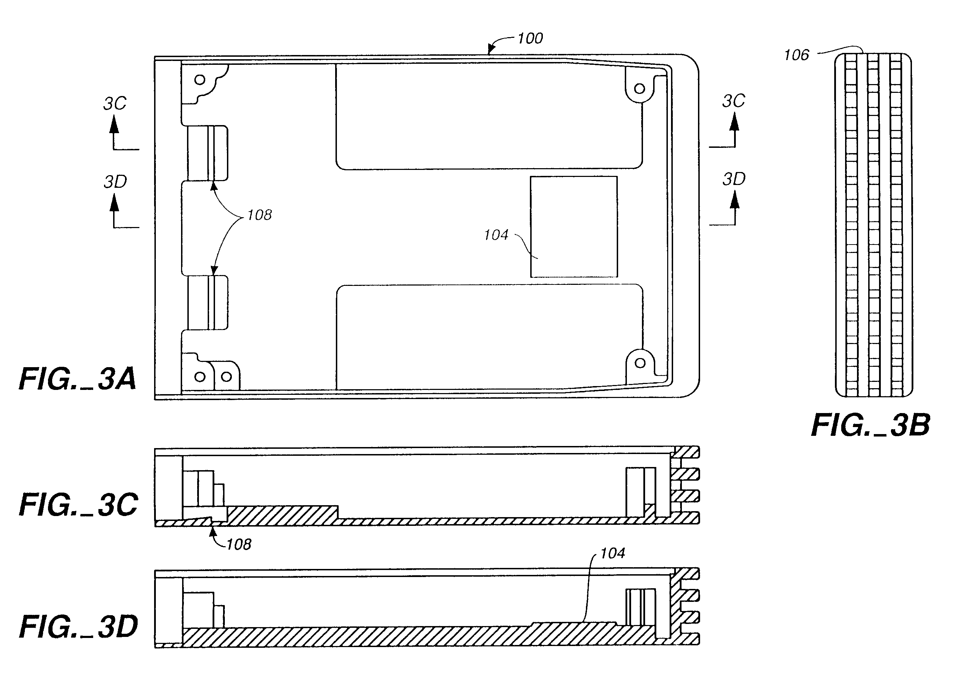

Figure 3 (A) illustrates the bottom surface of upper casing 100. Figure 3 (B) shows the surface of the right end. Figure 3 (C) shows a cross section of area C to C. Figure 3 (D) shows a cross section of area D to D. As is understood by Figure 3 (A) and (D), the area opposite microprocessor 601 is raised area 104, which is higher than the other areas. Silicon rubber piece 102 (see Figure 1) is mounted between raised area 104 and microprocessor 601.

As shown in Figure 3 (C), upper casing 100 is thicker in the area of raised area 104. This thicker area functions as a heat sink that cools microprocessor 601 by reducing the thermal resistance to the outside and smoothly dispersing the heat from microprocessor 601.

A number of holes have been place in edge surface 106 of upper casing 100, which is shown in Figure 3 (B), making the structure one through which air can pass easily. These holes are also effective in dissipating the heat inside of cartridge 503. Also, by opening up a lot of holes, the surface area of edge surface 106 will increase, and this, too, improves the heat dissipation. However, if the other heat dissipating measures are adequate, then it will not be necessary to open holes in edge surface 106.

As shown in Figure 3 (A) and (C), two protrusions 108 have been created. The claws 142 (see Figure 1) of cap 140 will catch in indentations 108. In the same manner, there are also indentations 130 on the lower casing 120 (see Figure 1). After upper casing 100 and lower casing 120 have been fixed in place using screws 162, the insertion of cap 140 will allow claws 142 to catch in indentations 108 and 130 in such a way that cap 140 cannot be pulled out. In cap 140 is a narrow slot, number 144. Plug section 551 of printed circuit board 550 passes through this slot 144 and protrudes from cap 140.

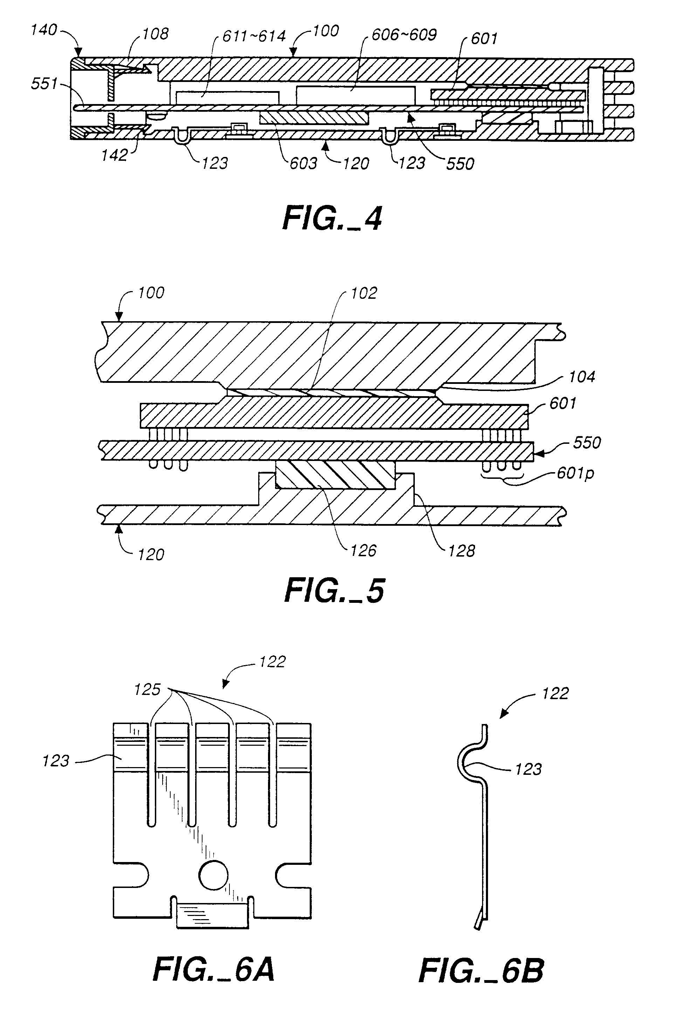

Figure 4 shows a cross section of cartridge 503 in the assembled condition and is the equivalent of cross section D-D of Figure 3 (A). As is understood from Figure 4, in the assembled condition, the end of printed circuit board 550 on the plug section 551 side is in a position that is slightly recess from the edge of upper casing 100 and the edge of lower casing 120. In addition, the printed circuit board 550 end where plug section 551 is located is chamfered. As indicated in Figure 2, the electrode of the plug section stops just inside of the edge of printed circuit board 550. This type of structure reduces the possibility of mistaken contact with plug section 551 when carrying cartridge 503 about.

Figure 5 is a cross sectional drawing showing an enlargement of the microprocessor 601 area in Figure 4. Compressible silicon rubber piece 126 is placed in the rubber retaining section of the lower casing 120. Compressible silicon rubber piece 126 pushes printed circuit board 550 upward. Pins 601p of microprocessor 601 have been attached with solder on top of printed circuit board 550. Heat dissipating silicon rubber piece 102 is mounted in between the upper surface of microprocessor 601 and raised area 104 of upper casing 100. The heat generated by microprocessor 601 will be discharged to the outside through heat dissipating silicon rubber piece 102 and the upper casing.

Compressible silicon rubber piece 126 creates good adhesion between microprocessor 601, compressible silicon rubber piece 102 and raised area 104 by pushing printed circuit board 550 upward. This also improves the heat dissipation between these components.

A material with good thermal conductance is used for heat dissipating silicon rubber piece 102. For example, the Shin-etsu silicon sheets (trade name) manufactured by Shin-etsu Polymer Company Limited, the TC-CG type (trade name) silicon sheets manufactured by Shin-etsu Chemical Company Limited, and the [Sakon] (trade name) that is manufactured by Fuji High Polymers may be used. All of these possess a relatively high thermal conductance rate of $1W/m \cdot K$ or higher.

Also, as indicated by the RTV rubber compound (trade name) of Shin-etsu Chemical Company Limited, materials that are in a non-solid state, such as a glutinous liquid state, a pate' state or a grease state, but harden when used, can also be used on the upper surface of microprocessor 601. If such a non-solid material is used, the tight adhesion between microprocessor 601 and upper casing 100 can be obtained through a small amount of thickness. Therefore, even a material with a relatively low thermal conductance will be a good heat dissipating material in this case.

The two spring components 122 (see Figure 1) attached to lower casing 120 also contribute to the improvement of the heat dissipating performance of cartridge 503. Figure 6 (A) is a drawing of the spring component 122. Figure 6 (B) shows a left side view of the spring. Bend 123 has been formed near the leading edge of spring component 122. Bend 123 is inserted into rectangular opening 132, which is formed in lower casing 120. As shown in Figure 4, with cartridge 503 in the assembled condition, bend 123 protrudes from the lower casing 120. At least one of the two spring components 122 makes contact with the printer's conductive frame, and this allows cartridge 503 to be grounded. Also, the heat generated inside of cartridge 503 passes through spring components 122 of the lower casing and is discharged to the printer. By enlarging the surface of the printer that makes contact with the spring components 122, the heat dissipating performance can be further improved.

As indicated in Figure 6 (A), bend 123 of spring component 122 is divided up into a number of slits. External air passes between these slits and flows inside of cartridge 503. The air that flows inside passes through the opening in the end of upper casing 100 (see Figure 3 (B)) and discharges to the outside. This type of air flow is effective in cooling the devices inside of cartridge 503. In addition, because spring component 122 is divided up by slits, the contact points between the spring component 122 and the printer frame increase, allowing a stable ground to be taken as well as improving thermal conductance.

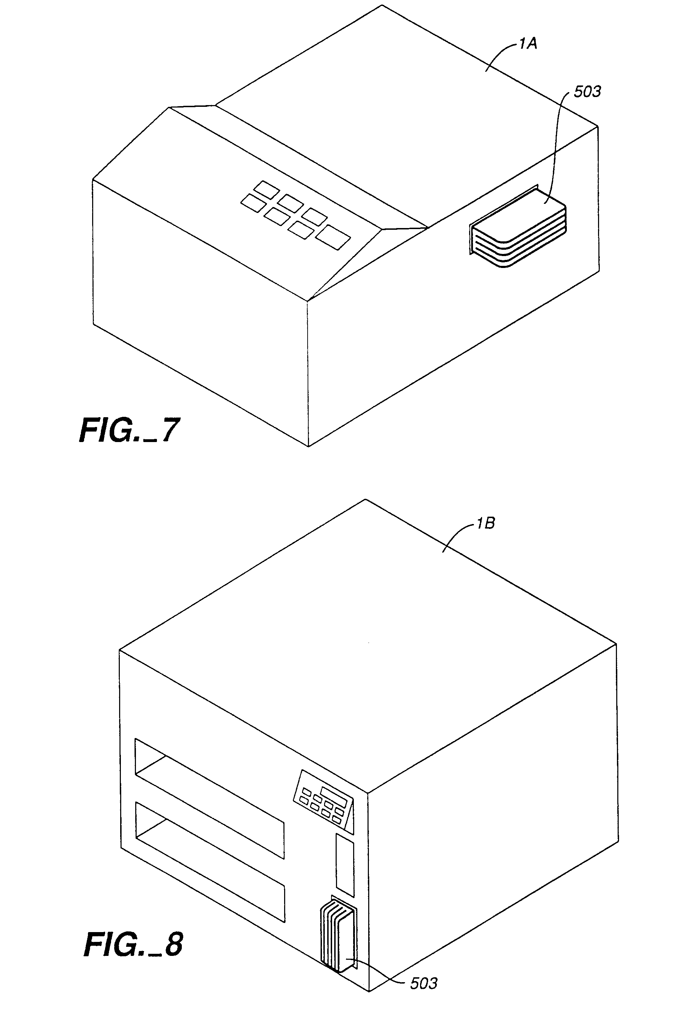

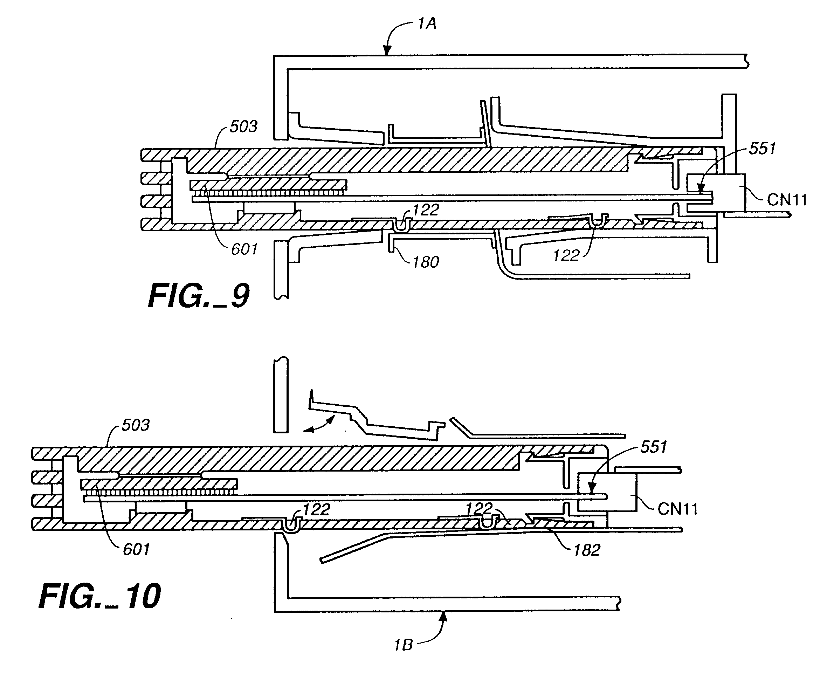

Figure 7 and Figure 8 show an angular view of cartridge 503 inserted into printer type 1 and printer type 2, numbers 1a and 1b, respectively. Also, Figure 9 and Figure 10 are cross sectional drawings of cartridge 503 and the frames of printer 1a and 1b, with cartridge 503 in the inserted condition. However, in Figure 9 and Figure 10, for the sake of illustration, part of the slanted lines used to indicated the cross section have been omitted.

In Figure 9, plug 551 of the printed circuit board has been inserted into connector N1 on the printer side. At this time, the spring component 122 at the rear end of cartridge 503 (the end opposite that of the connector) is making contact with metal frame 180 of printer 1a. In Figure 10, spring component 122 at the front end of cartridge 503 (the connector end) is making contact with metal frame 182 of printer 1b.

As indicated in Figures 7 through 10, when cartridge 503 is inserted, microprocessor 601 is at the entrance section of the cartridge insertion slot. If microprocessor 601 is made so that it is at the end relative to the direction of insertion, it is often the case that the portion of the cartridge where microprocessor 601 exists will protrude from the printer, even if cartridge 503 is inserted relatively deep inside of the printer. As a result, the heat generated by microprocessor 601 will be effectively discharged to the outside.

In the case of Figure 10, the portion of the cartridge in which microprocessor 601 is located is exposed completely to the outside. Therefore, the heat dissipation of microprocessor 601 is even more effective than it is in Figure 9.

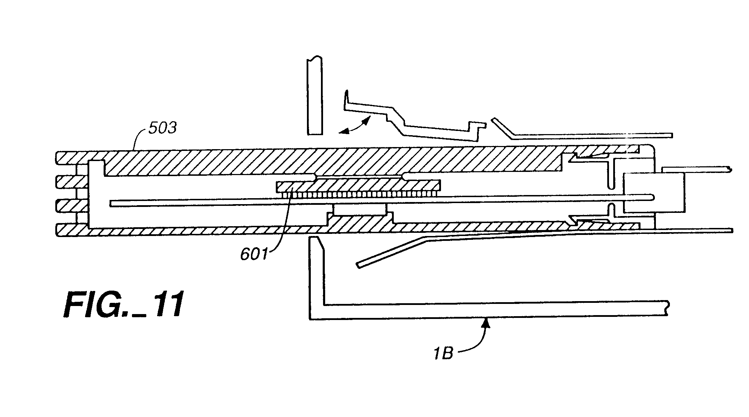

Figure 11 is a drawing of a cross section in which microprocessor 601 is located in the center, between the front end (plug side) and rear end of cartridge 503. Even in the case indicated in Figure 11, microprocessor 601 is in a position that is near the outside of printer 1b. Therefore, the heat generated by microprocessor 601 is adequately discharged to the outside. As a result, it is possible to achieve adequate heat dissipation by placing microprocessor 601 in an area approximately between the center and the rear of the cartridge.

However, as indicated in Figure 9, which was described above, if the cartridge is inserted very deeply into the printer, it is possible to more effectively dissipate the heat when microprocessor 601 is at the rear end of cartridge 503. (That is, the end that is opposite the end where the plug is located on printed circuit board 550.)

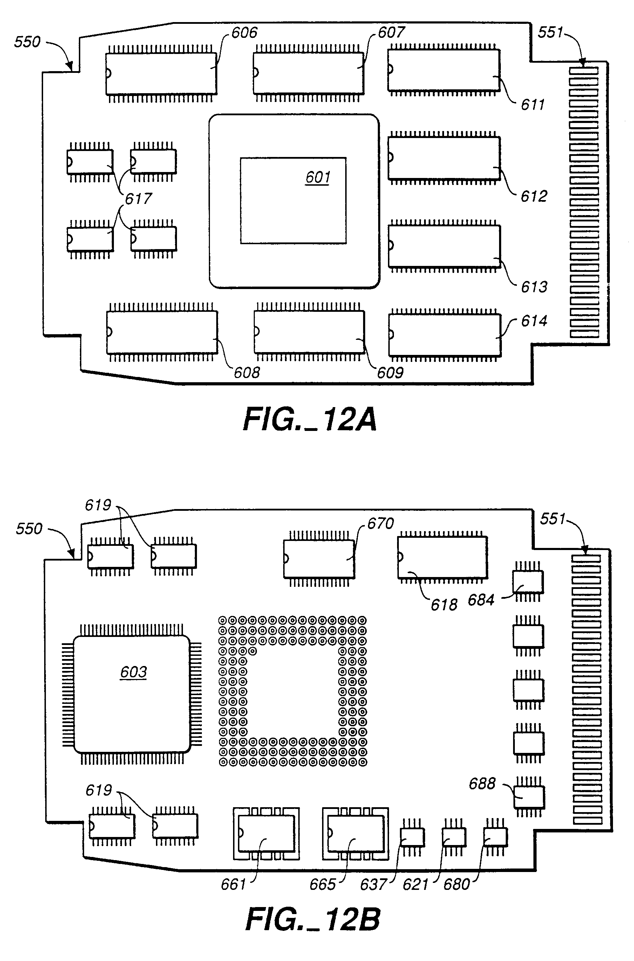

Figure 12 is a drawing showing the layout of the devices on top of printed circuit board 550 when microprocessor 601 is in the center of cartridge 503. This drawing correlates to Figure 2. In the layout in Figure 12, the position of microprocessor 601 and four tri-state buffers 617 have been interchanged. In addition, the position of ASIC 603 has been changed to the end of the cartridge.

B. Thermal Design Calculations and Temperature Rise Test Results

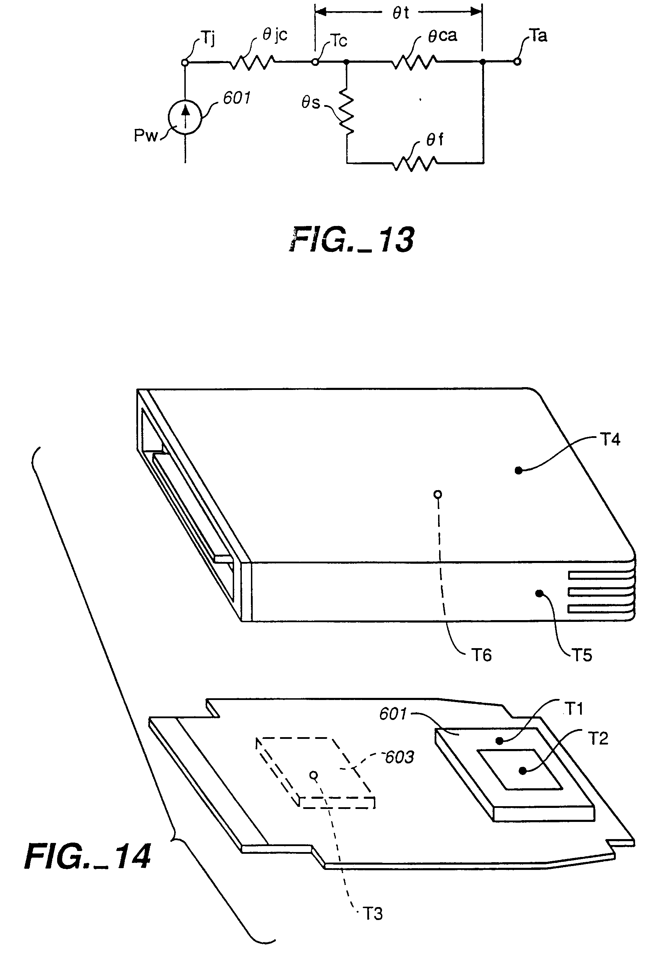

Figure 13 shows a drawing of the equalization circuit of the heat dissipation route that passes through upper casing 100. The definitions of all of the symbols used in Figure 13 and the numerical values in the thermal design are as follows:

Pw:      Amount of heat generated by microprocessor 601.

Tj:       The temperature of the devices inside of microprocessor 601.

Tc:      The temperature of the package of microprocessor 601.

Ta:     The temperature of the environment around the cartridge ($=40°$ C)

$\theta$jc:     The thermal resistance of the microprocessor 601 package.

$\theta$ca:     The thermal resistance between the package of microprocessor 601 and the external environment. ($=18°$

C/W.     The designed value when the package does not make contact with anything other component.)

$\theta$s:     The thermal resistance ($=1°$ C/W) of heat dissipating silicon rubber piece 102.

$\theta$f:     The thermal resistance of upper casing 100 ($=5.5°$ C/W)

Pw, which is the amount of heat generated by microprocessor 601, is a value that is calculated as follows: When a semiconductor device configured using CMOS is used as microprocessor 601, the amount of heat it generates, Pw, is nearly proportional to the frequency of the clock signal. For example, if the Am29030, which is manufactured by AMD, is used, the current flowing inside of the device is 22 mA per megahertz. If a clock signal with a frequency of 25 MHz is used, there will be about 550 mA ($=22 \times 25$) of current flow. If the applied voltage is 5.25 volts, the amount of heat generated by microprocessor 601, Pw, will be about 2.9 watts ($=5,25 \times 0.55$).

The thermal resistance of the upper casing 100, $\theta$f, will be a value calculated as an aluminum plate with dimensions of 90 x 140 x 1.6 mm. In the equalization circuit in Figure 13, compound thermal resistance, $\theta$t, between ambient temperature Ta and the temperature of the top of the package Tc, are calculated as follows:

$$\theta t = \theta ca \times (\theta x + \theta f) / \{\theta ca + (\theta s + \theta f)\} = 4.8 \, [°C / W]$$

In addition, the rising value $\Delta$Tc of package temperature Tc due to the heat generated by microprocessor 601 is calculated as follows:

$$\Delta Tc = Ps \times \theta t = 2.9 \, [W] \times 4.8 \, [°C / W] = 14 \, [°C]$$

As a result, package temperature Tc is provided as follows:

$$Tc = \Delta Tc + Ta = 14 + 40 = 54 \, [°C]$$

If we assume the temperature rise due to the generation of heat from devices that exist inside of the cartridge other than microprocessor 601 to be 20 degrees, the maximum value of package temperature Tc will be 74°C ($=54 = 20$).

If microprocessor 601, which has a temperature tolerance of 74°C or higher, is used, and if an upper casing of aluminum with dimensions of 90 x 140 x 1.6 mm is used, it is possible to satisfy about 80° C of the microprocessor 601 temperature tolerance value. As a result, it is possible to prevent the erroneous operation or a break down of microprocessor 601.

The dimensions of the upper surface of upper casing 100 in the embodiment is about 90 x 140 x 1.6 mm (the 1.6 mm thickness is the value of the thinnest area). The temperature tolerance of the AMD-manufactured Am29030 is 85 degrees C. Therefore, based on the above calculation, the casing temperature of microprocessor 601 can be maintained within the tolerance value.

A temperature rise test during operation was performed on the cartridge 503 described above. Figure 14 is a concept drawing showing the temperature measuring points during the temperature rise test. Table 1 shows the results of temperature measurements when cartridge 503 was operated as a single unit.

Table 1

| Temperature Rise Test Results of Cartridge Unit (Room Temperature 28°C) | | | | | | |
|---|---|---|---|---|---|---|
| Measuring Point | | Maximum Value (°C) | Difference with room temp. | Expected value w/40°C room temp. | Tolerance (°C) | Determination |
| T1 | Processor surface (ceramic portion) | 57.2 | 29.2 | 69.2 | 85 | 0 |
| T2 | Processor surface (metal portion) | 44.3 | 16.3 | 56.3 | 85 | 0 |
| T3 | ASIC surface | 50.1 | 22.1 | 62.1 | 85 | 0 |
| T4 | Upper casing surface | 41.2 | 13.2 | 53.2 | 60 | 0 |
| T5 | Lower casing surface | 41.3 | 13.3 | 53.3 | 60 | 0 |

Based on Table 1, the temperature measured at each location during operation is lower than the maximum temperature tolerance. This shows the excellent capability of the heat dissipating structure of cartridge 503. Table 2 presents temperature measuring results for when the exemplary cartridge is inserted into a printer and then operated.

Table 2

| Temperature Rise Test Results of Cartridge When Inserted in the Printer (Room Temperature 28°C) | | | | | | |
|---|---|---|---|---|---|---|
| Measuring Point | | Maximum Value (°C) | Difference with room temp. | Expected value w/40°C room temp. | Tolerance (°C) | Determination |
| T1 | Processor surface (ceramic portion) | 55.4 | 27.4 | 67.4 | 85 | 0 |
| T2 | Processor surface (metal portion) | 46.9 | 18.9 | 58.9 | 85 | 0 |
| T3 | ASIC surface | 47.6 | 19.6 | 59.6 | 85 | 0 |
| T4 | Upper casing surface | 39.1 | 11.1 | 51.1 | 60 | 0 |
| T6 | Lower casing surface | 40.6 | 12.6 | 52.6 | 60 | 0 |

In Table 2, the temperature of each area was below the maximum tolerance, confirming that the heat dissipating structure is excellent.

C. Examples of Cartridge Structure Modifications

(1) Both upper casing 100 and lower casing 120 are made of aluminum. However, these casings are not limited to this. In general, they may be made of any material that has a high rate of thermal conductance.

An aluminum cartridge also functions as an electro-magnetic shield, cutting off the high frequency noise generated by microprocessor 601. If the cartridge casing is made of conductive material in this manner, there is the benefit of being able to have a heat dissipating function and an electro-magnetic shield function. In addition to using aluminum as a conductive material, it is also good to use aluminum alloys and bronze alloys, etc., which are generally used as conductive materials. In particular, because aluminum and aluminum alloys are generally light in weight, there is the benefit of being able to make a cartridge that is easy to carry around.

(2) In the thermal design described above, a situation in which an aluminum plate heat sink with dimensions of 90 x 140 x 1.6 mm was assumed. This aluminum plate was the size of the top surface of upper casing 100 (about 90 x 140 mm) and had the thickness of the thinnest area (1.6 mm) of upper casing 100. Therefore, in terms of the heat dissipating design, it possible for the upper casing 100 to be made of a conductive material such as aluminum and the lower casing to be made of a non-metallic material such as plastic.

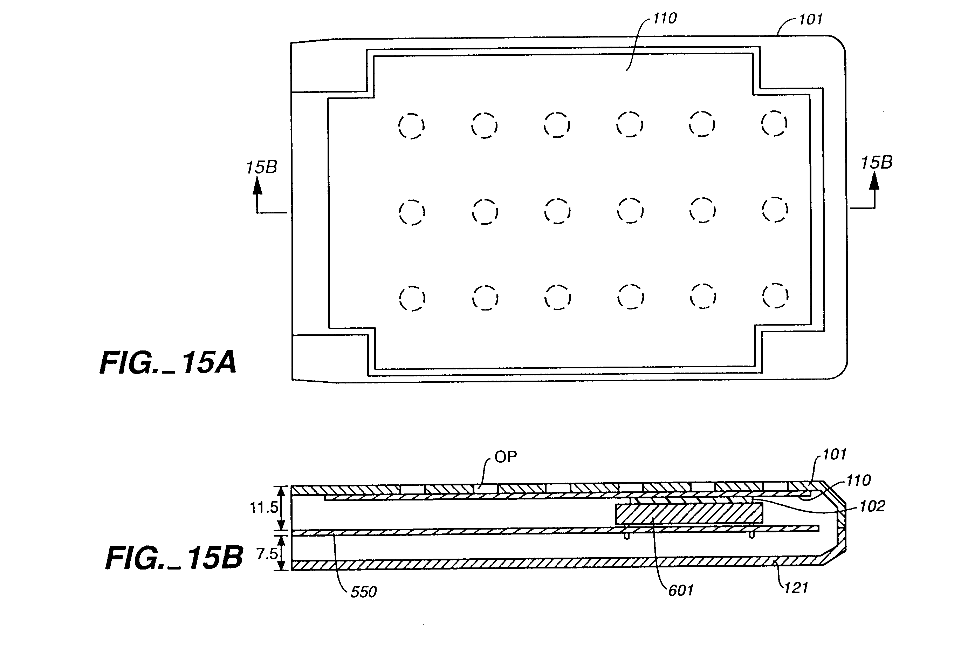

(3) Also, it is possible to make the cartridge case out of non-metallic materials such as plastic. Figure 15 (A) is a drawing that shows upper casing 101, which is made of plastic. Inside of the casing is heat dissipating plate 110. Figure 15 (B) shows a cross section of the casing in the assembled condition, assuming section B-B in Figure 15 (A). A lot of openings OP have been made in the top surface of upper casing 101, as indicated in Figure 15 (B). These openings OP function to discharge to the outside the heat transmitted from microprocessor 610 through heat dissipating silicon rubber piece 102 to metal plate 110.

If openings are also made in metal plate 110 and if those openings are at least placed in that same locations as the openings OP of upper casing 100, it will allow the air inside of the cartridge casing to escape to the outside, further increasing the heat dissipating function. In addition, it is also possible to increase the heat dissipating performance by making holes in printed circuit board 550. Upper casing 101 does not have to be all metal, such as aluminum. If the level of heat dissipation described above is satisfied, it is possible to have part of it be metal and a part of it be plastic.

If the cartridge case itself is made of a non-metallic material in this manner, there is the advantage of being able to produce the case cheaply and making it light weight and easy to carry around. However, if a material is selected with a comparatively large thermal conductance rate of about 1W/m • K or more, the heat dissipation becomes more effective. For example, depending on how it is used, FRP, which is a type of plastic, will exhibit a thermal conductance rate of several W/m • K, making it good as a plastic material for a plastic cartridge casing. However, because metal generally has a thermal conductance rate at the 10W/m • K level, in terms of heat dissipating design, it is best to have a metal casing.

(4) Metal plate 110 may be omitted from the cartridge casing in Figure 15. Also, a gap may be made between metal plate 110 and upper casing 101. If a gap is made between metal plate 110 and upper casing 101, the area around metal plate 110 will be cooled and by the air and the warm air will be discharge upward from the holes of upper casing 100. Therefore, it is possible to cool microprocessor 601 effectively. In this case, heat dissipating silicon rubber piece 102 may be omitted.

(5) As shown in both Figure 4 and Figure 15 (B), the position of printed circuit board 550 in slightly downward of center in the thickness direction of the cartridge casing. The purpose of this is to prevent the cartridge from being improperly inserted in the printer. That is, when the cartridge is mistakenly inserted in the direction opposite of the proper direction, plug section 551 will not enter the connector, preventing improper insertion.

Among the two spaces within the cartridge, microprocessor 601 is located in the relatively large space of the upper section. The spaces are separated by printed circuit board 550. As a result, compared to installing it in the space of the relatively smaller lower section, there is lower air resistance in the area surrounding microprocessor 601, and this allows more effective cooling of microprocessor 601.

Furthermore, in the relatively larger upper section, there are times when pin sockets are placed on top of printed circuit board 550 and it is possible to take only the amount of space required to allow microprocessor 601 to be inserted in the pin sockets. Therefore, if microprocessor 601 is placed in the larger space, there is the advantage of it being easier to connect microprocessor 601 to printed circuit board 550 using the pin sockets.

(6) In the cartridge in Figure 1, two spring components 122 have been installed in lower casing 120. This was done out of consideration for having one of the two spring components make positive contact with the frame of the printer at the insertion slot. However, instead of in this manner making two such springs, long spring component 134 may be used in the cartridge insertion direction. Spring component 134 has a corrugated area. This corrugated area protrudes outside of the opening of lower casing 136. By using long spring component 134 in the cartridge insertion direction, it is possible to have positive contact with the printer frame if the cartridge is inserted deeply inside of the printer or if it is not inserted deeply inside of the printer.

(7) Heat dissipating silicon rubber piece 102 makes close contact with the upper surface of microprocessor 601 and the lower surface of upper casing 100. It is used as a material to transmit the heat of microprocessor 601 to upper casing 100. Therefore, instead of silicon rubber, other materials that effectively conduct the heat may be made and used. Other materials that may be considered are mica, silicon paste, resins with a relatively high thermal conductance, such as epoxy resins, resins that are relatively soft and have good adhesion, such as urethane, and metal plating. The silicon rubber and resins may be applied as a spray or as a paste. Among these, the materials that have a relatively high thermal conductance of 1W/m • K or more are especially good. Also, if the material is thick, the thermal conductance will deteriorate. Therefore, the thickness should be 1 mm or less.

It is also acceptable to use nothing between the top surface of microprocessor 601 and the inner surface of upper casing 100, allowing them to make direct contact. If the top surface of microprocessor 601 and the inner surface of upper casing 100 are allowed to make direct contact, the heat dissipating performance will increase.

However, the top surface of microprocessor 601 and the inner surface of upper casing 100 are both hard, making it possible that they will not make close contact. Therefore, to assure the closeness of the contact between the top surface of microprocessor 601 and the inner surface of upper casing 100, it is better to use a material that makes good contact, as those described above.

(8) Compressible silicon rubber piece 126 is a component that has the function of pushing printed circuit board 550 upward from the bottom. Therefore, instead of silicon rubber, other elastic materials may be used.

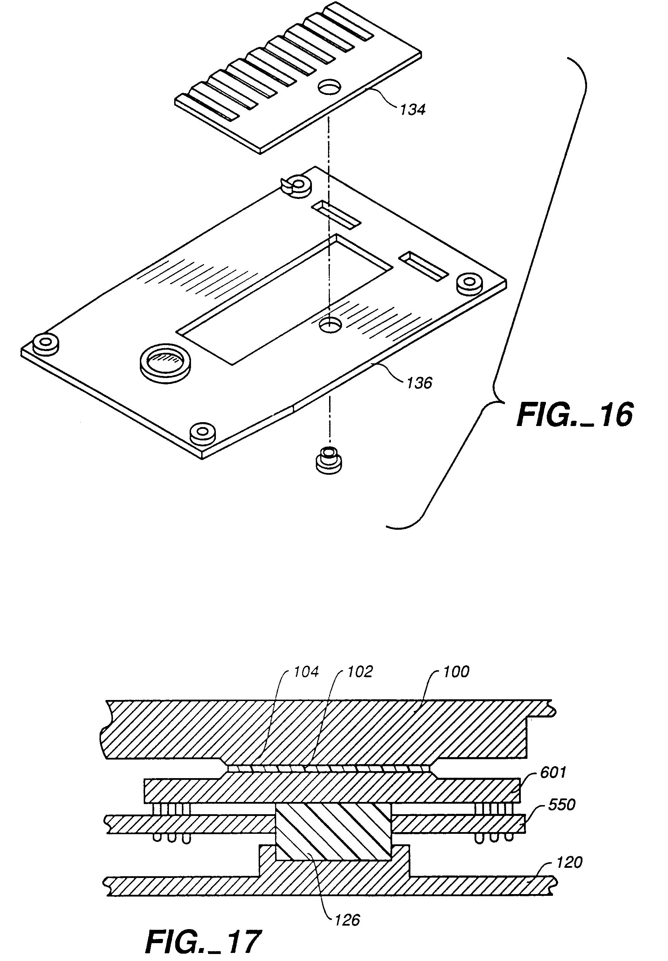

In addition, as shown in Figure 17, holes may be put in the portion of printed circuit board 550 where compressible rubber piece 126 is located so that compressible silicon rubber piece 126 pushes directly on microprocessor 601. If compressible rubber piece 126 is positioned so that it pushes directly on microprocessor 601, it will further increase the heat dissipating performance since heat can also be dissipated from through silicon rubber.

However, it is possible to omit compressible silicon rubber piece 126. Because printed circuit board 550 is made of flexible plastic, it is possible to push microprocessor 601 upward with the elasticity of printed circuit board 550 alone.

(9) As indicated n Figure 17, the upper casing 100 portion that makes contact with microprocessor 601 is slightly raised area 104. However, if the top surface of microprocessor 601 is made higher than the top surface of the other circuit devices on the same side of printed circuit board 550, it will not be necessary to have raised area 104. If raised area 104 is provided, some unevenness on the inner surface of upper casing 100 can be allowed, providing the advantage that upper casing 100 can be manufactured easily using die casting or hand processing.

(10) In the above embodiments, microprocessor 601 was placed at approximately the center and at the rear end of the of the cartridge in the direction in which the cartridge is inserted. However, if a circuit device that generate more heat than microprocessor 601 exist in the cartridge, that circuit device may be placed at approximately the center and rear end of the cartridge. That is, in general, it is better to place the circuit device that generates to most heat at approximately the center and at the rear end of the cartridge.

[ii] The Electrical Configuration of the Printer and Cartridge

A. Overall Configuration of the Printer and Cartridge

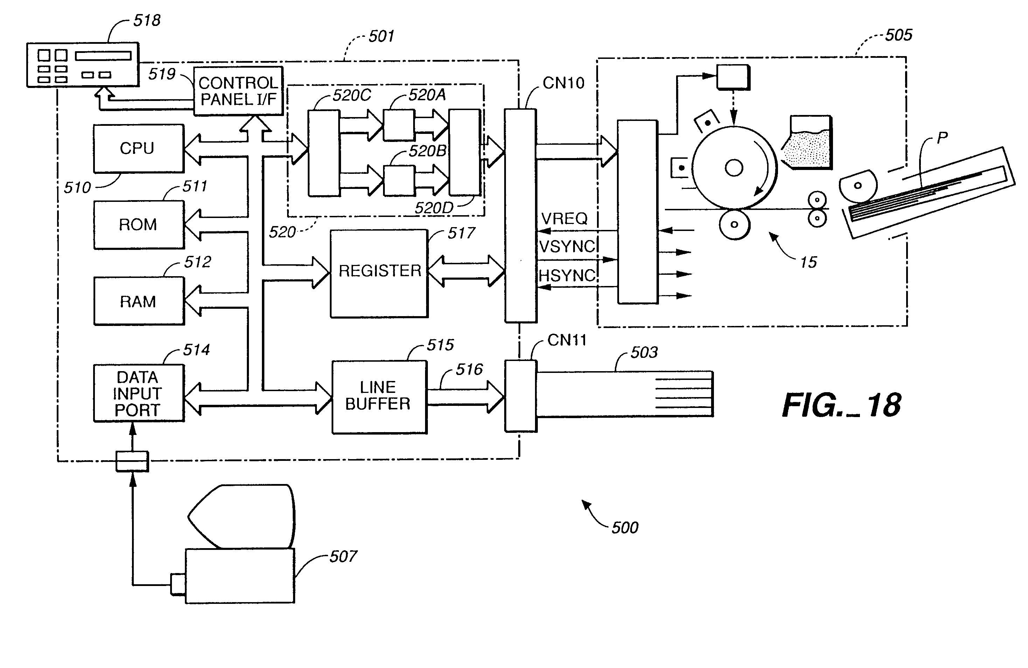

Figure 18 is a block diagram showing the general configuration of laser printer 500, which applies to the embodiments, and cartridge 503, which will be inserted into this printer.

Laser printer 500 is equipped with electronic control device 501, which controls all of laser printer 500, and laser engine 505, which forms an image on paper P. Laser printer 500 is connected to work station 507.

Electronic control device 501 develops the image data (bit map data) based on the print data sent from work station 507. Image data that is developed through connector CN10 is sent to laser engine 505. Laser engine 505 drives xerography unit 15 in respouse to this and prints an image in paper P.

As shown in Figure 18, electronic control device 501 is equipped with a commonly known CPU 510 (in this embodiment the MC68000, which is made by Motorola), ROM 511, which stores the programs the CPU executes, RAM 512, which stores print data and image data after it has been developed, data input/output port 514, which receives print data from work station 507, which is the host computer, line buffer 515, in which is mounted bus line 516, which conducts the data exchange between cartridge 503, register 517, which is for exchanging command and status data with laser engine 505, console panel interface 519, which controls the interfacing of laser printer 500 with console panel interface 518, and double buffer circuit 520, which retains the image data to be sent to laser engine 505.

Double buffer circuit 520 has two RAMs, RAM 520A and RAM 520B, which allow eight lines of printing from laser engine 505, that is, 4 kilobytes of memory capacity. These RAMs write image data from CPU 510 alternately through memory write controller 520C. Laser engine 505 alternately reads these two RAMS, 520A and 520B, through memory read controller 520D and is able to convert the image data into video signals synchronously with the rotation of the photosensitive drum in order to print. The reason that the two RAMS, RAM 520A and 520B, have to be provided and the reading and writing of data take place alternately is due to the fact that the access from CPU 510 and the access from laser engine 505 have to be carried out independently.

After CPU 510 writes data to one of the RAMs, it will set a flag at a specified bit of register 517. In response to this, laser engine 505 will check this flag and read the image data stored in the RAM where the data has been written. During the reading, another bit of register 517 will be set to inform CPU 510 of which RAM is being read. At this time, the other RAM will not be accessed by laser engine 505. So, CPU 510 will write the next 8 lines of image data to the other RAM during this period. When the reading of the other RAM has been completed, laser engine 505 will reset the flag and shift to reading the other RAM. The data writing speed of CPU 510 is faster than the data reading speed of laser engine 505, that is, the print execution speed. Therefore, a memory access conflict between the two is avoided and the transfer of one page of image data takes place positively and simply.

Cartridge 503 is connected to electronic control device 501 through connector CN11. Line buffer 515 possesses a bus driver (not illustrated) that is mounted somewhere along data bus 34. This bus driver is a one-way buffer that transfers data from connector CN11 in the direction of CPU 510 only. In other words, viewed from CPU 510, cartridge 503, which is connected to connector CN11, is a read only device.

When the power is turned on, electronic control unit 501 will determine if cartridge 503 is connected to connector CN11 or not. If it determines that it is connected, there will be an internal reset of electronic control unit 501. After that, it will jump to a specified address of the ROM (discussed later) provided in cartridge 503. Subsequent to that, it will execute in sequence the processing provided in cartridge 503. Cartridge 503 will interpret the program from the page description language that is output to laser printer 500 from work station 507. Cartridge 503 will develop it into image data and printing will take place by means of laser engine 505.

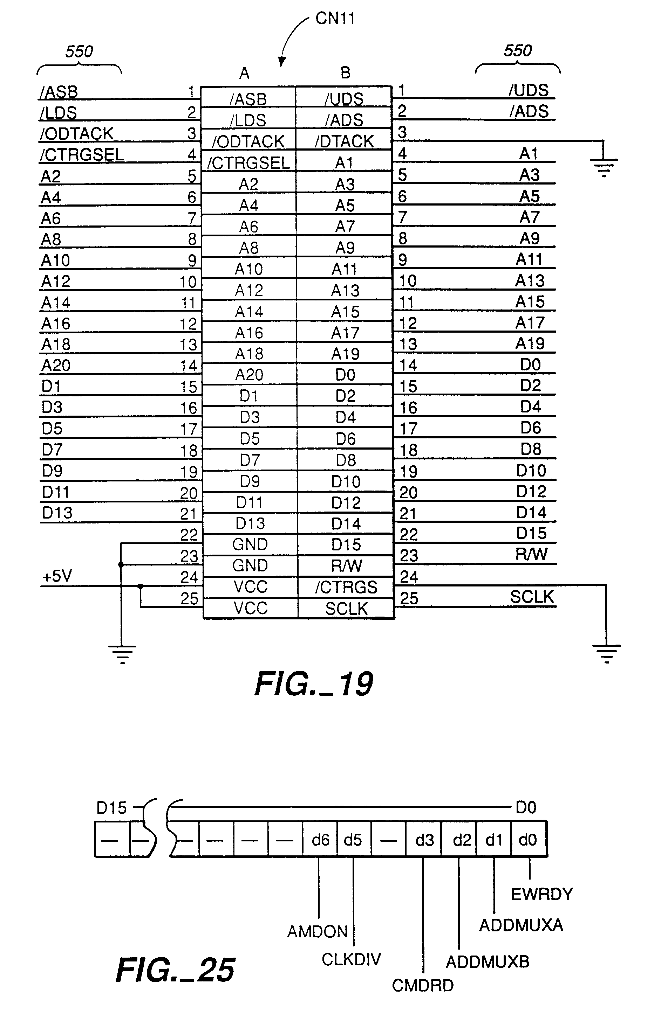

Figure 19 shows the wiring relationship of plug 551, which has been formed on one end of printed circuit board 550, and connector CN11. Plug 551 possesses 25 pins on either side of the two sided (sides A and B) printed circuit board. In Figure 19, a signal name has been imprinted in correspondence to each pin of plug 551. The slash mark [/] before the signal name indicates that the signal is active low. The meaning of each signal is as follows:

Signal/ASB: The address strobe signal transmitted by CPU 510 (Motorola MC68000).

Signal/UDS: Upper data strobe signal that is output by CPU 510.

Signal/LDS: Lower data strobe signal that is output by CPU 510.

Signal/ADS: The address strobe assist signal that is generated based on the address strobe signal/ASB in electronic control device 501. This address strobe assist signal/ADS indicates a different activity with a different printer when the printer starts up (when initialized). As will be discussed later, in this embodiment, the printer type can be determined based on the activity that takes place when address strobe assist signal/ADS is initialized.

Signal/ODTACK: The output data acknowledge signal data is transferred from cartridge 503 to electronic control device 501.

Signal/CTRGSEL: CPU 510 selects cartridge 503 and this is the cartridge select signal that accesses the ROM and registers, etc., that have been allocated to the internal address spaces.

Signal A1-A20: The address signal output by the CPU.

Signal D1-D15: The output signal from cartridge 503.

Signal R/W: The read and write signal output by CPU 510.

Signal SCLK: The clock signal output from the oscillator (not illustrated) built into laser printer 500.

Signal/CTRGS, which is provided on the laser printer 500 side, will be pulled down to the L level when cartridge 503 is inserted. As a result of this, CPU 510 will detect that cartridge 503 is inserted into connector CN11.

CPU 510 will use 23-bit address signals A1 to A23 to specify the word address. It will also use signal/UDS and signal/LDS to specify the high end bytes and low end bytes of each word. As a result, CPU 510 is able to handle 16 megabytes of address space, from 000000h to FFFFFFh. Here the symbol 'h' that is attached to the end of the address indicates a hexadecimal display.

B. Cartridge Address Space

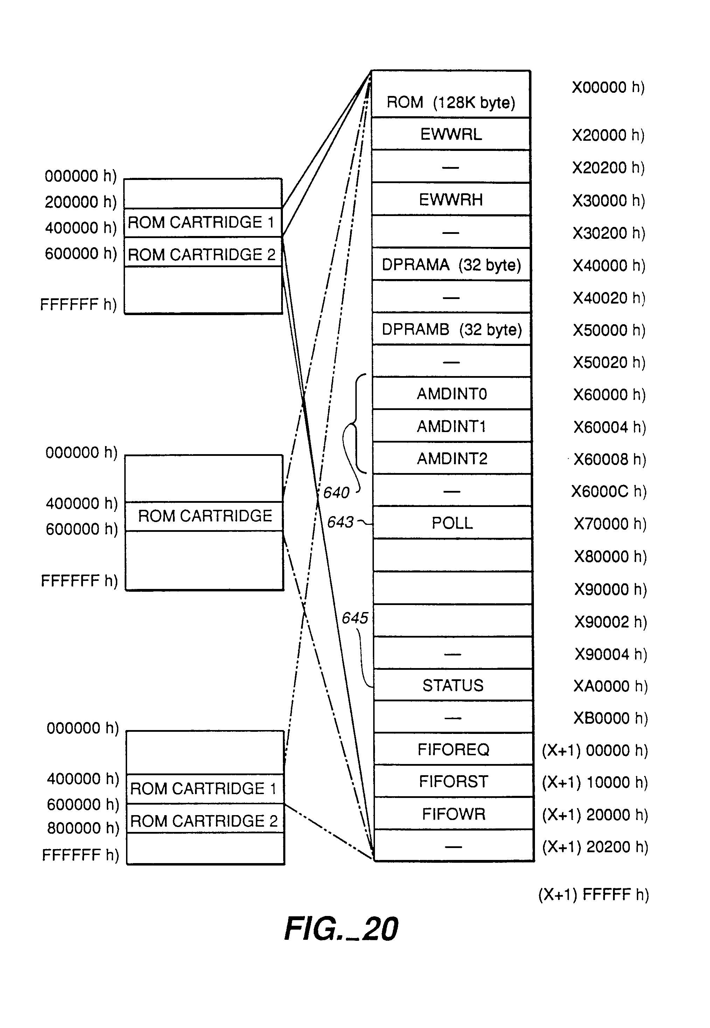

This cartridge 503 will be allocated some of the address space handled by electronic control device 501. CPU 510 handles the address space from 000000h to FFFFFFh, but part of that is allocated for ROM cartridge use. The space allocated to cartridge 503 will change depending on the laser printer model. However, in the case of the Hewlett-Packard laser printer, as indicated in Figure 20 in the left hand column, it is normal to have 2 megabytes of space, as from 200000h to 3FFFFFh or from 400000h to 5FFFFFh.

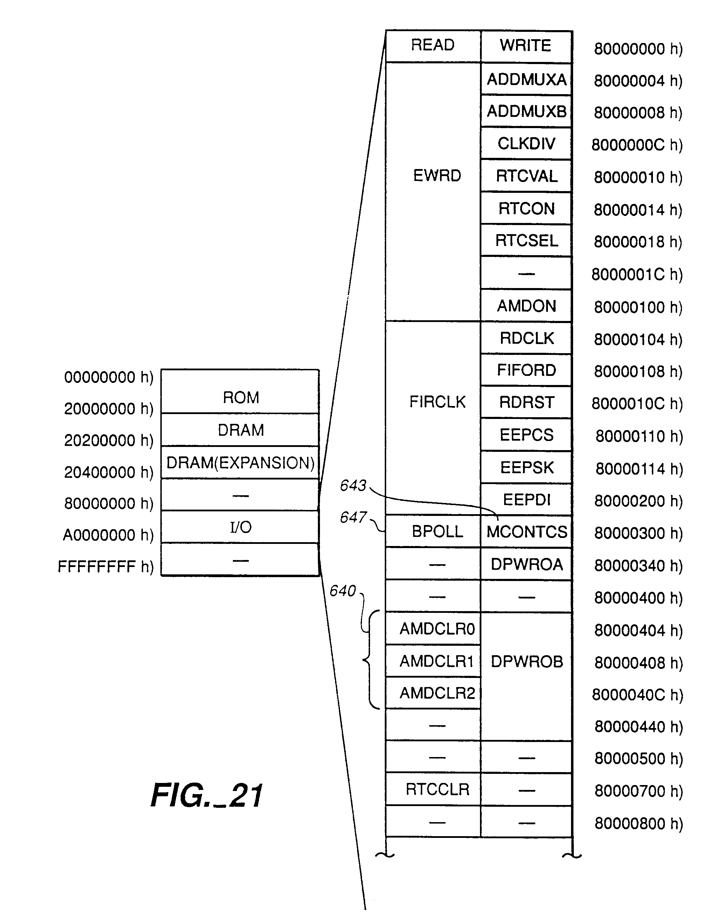

However, the microprocessor 601 that is provided in cartridge 503 of this embodiment is an AMD model AMD29030 - 25 MHz. The address space that it can handle is 4 gigabytes, from 00000000h to FFFFFFFFh. In this address space, not only are ROM and RAM allocated, the various registers used for data exchange with the printer side electronic control device 501 are also allocated. This has been shown in Figure 21. Below, the configuration of the inside of cartridge 503 will be described along with the address space for both microprocessors.

C. Internal Configuration of the Cartridge

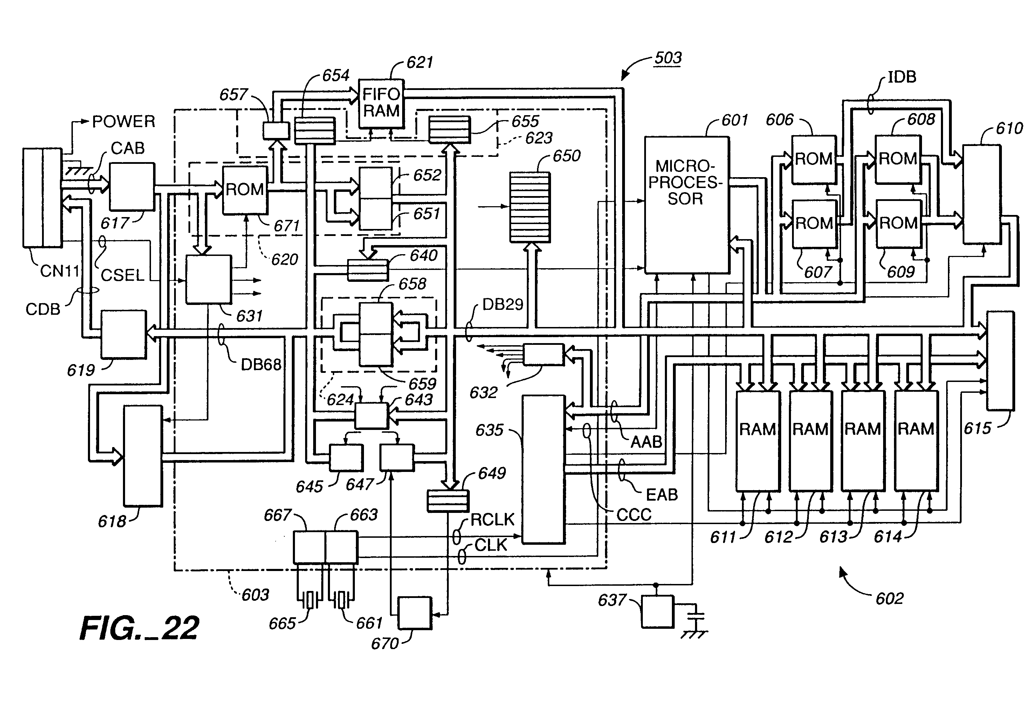

The internal configuration of cartridge 503 has been shown in Figure 22. As shown in the drawing, cartridge 503 is configured with microprocessor 601, which controls everything, in the middle. It is configured of ROM, RAM and memory area 602, which is made up of the peripheral circuitry, and data transfer controller 603, which controls all of the data exchange with electronic control device 501, and other circuitry.

Memory area 602 is composed of ROMs 606 to 609, which are a total of 2 megabytes and store the programs that microprocessor 601 executes, selector 610, which is used for the bank switching of ROMs 606 to 609, RAM 611 to RAM 614, which are a total of 2 megabytes and retain print data received from electronic control device 501 and retain image data after it has been developed. The 2 megabytes of ROMs 606 to 609 are each mask ROM of 16 bits by 256 kilobits, which equals 4 megabits. As shown in Figure 21, they have been allocated to address spaces 00000000h to 1FFFFFh. ROMs 606 and 607 and ROMs 608 and 609 each form a bank, a 2-unit set being one bank, each composing a 32-bit data bus. ROMs 606 and 609 and microprocessor 601 are connected by address bus AAB and the control signal bus. Also, data bus IDB of ROMs 606 to 609 are connected to data bus DB20 through data selector 610. Through these, microprocessor 601 is able to read data from ROMs 606 to 609.

All address signals, except the low end 3 bits (A0, A1 and A2) of address bus AAB from microprocessor 601, are input to ROMs 606 and 607 and ROMs 608 and 609. Because the low end 2 bits (A0 and A1) are not input, the reading of data by microprocessor 601 will be in units of one word, which equals 32 bits (4 byte units). In addition, if address A2 has not been provided, when the specified data are read, the four ROMs, numbers 606 to 609, will output data simultaneously. Data selector 610 makes adjustments to data that has been output simultaneously. That is, the access of the ROMs by microprocessor 601 often takes place from consecutive addresses. Therefore, with 32 bits as one word, consecutive words are read from ROMs 606 to 609. If this is actually the reading of consecutive words, the banks belonging to the ROMs will be switched in sequence by data selector 610 and the data will be read consecutively. As a result, the reading of data in the case of a consecutive two words will be extremely fast.

RAMs 611 to RAM 614 are 16 by 256 kilobit DRAMs, that is, 4 megabits. As shown in Figure 21, they have been allocated to the 2 megabytes of address spaces from 20000000h to 201FFFFFh. It is also possible to increase the memory in cartridge 503 by an additional 2 megabytes. For this purpose, expansion RAM interface 615 has been provided. This expansion RAM interface 615 has been allocated to the address spaces from 20200000h to 203FFFFFh. It is possible to install a maximum of 2 megabytes of SIMM type RAM in expansion RAM interface 615. RAMs 611 to 614 and the expansion RAM 615 data lines are connected directly to data bus DB29, which is the microprocessor 601 data bus. The address line is connected to microprocessor 601 address bus AAB through data transfer controller 603. The I/O of the registers, which will be discussed later, have been allocated to the address spaces from 80000000h.

As shown in Figure 20, when cartridge 503 is viewed from the electronic control device 501 side of laser printer 500, ROM has been allocated to the first 128 kilobytes. That is, cartridge 503 also stores programs that are executed by CPU 510 of electronic control device 501. When cartridge 503 is inserted, CPU 510 of electronic control device 501 executes a jump command to the specified address of this ROM after the initialization has been completed. Subsequent to that, CPU 510 operates according to the processing steps stored in this ROM.

When CPU 510 accesses the first 128 kilobytes of the 2 megabyte space allocated to cartridge 503, ROM 618 will be accessed by the address signal that is output through address buffers 617, which have been provided for connector side address bus CAB of cartridge 503. The commands and data stored in ROM 618 will be sent to CPU 510 of electronic control device 501 through data buffer 619, which has been formed on data bus CDB of the connector. The 'X' in Figure 20 represents the high end 4 bits of the first address of the allocated spaces.

D. Data Transfer Controller 603

A variety of control registers and status registers have been placed at addresses other than addresses allocated to the ROMs and RAMs in the address maps shown in Figure 20 and Figure 21. Because these registers have been provided for data transfer controller 603, data transfer controller 603 will be described next. The description will chiefly be that of the circuitry, but the address maps (Figures 20 and 21) will referenced as required.

Data transfer controller 603, which is shown in Figure 22, is formed from an ASIC with 7,900 usable gates. This ASIC is manufactured by Seiko Epson, and is a standard cell device, model number SSC 3630, which has low power consumption and is manufactured using a CMOS process. Data transfer controller 603 was designed using an ASIC design system called LADSNET, which is a CAD system that also is manufactured by Seiko Epson. This CAD system is used to design logic circuits and is equipped with devices such as latches, flip-flops, counters, and programmable logic arrays in the form of libraries. After using these to design the required logic circuit, it is possible to automatically generate an ASIC pattern.

Data transfer controller 603, which was created as an ASIC, controls the data exchange between electronic control device 501 of printer 500 and microprocessor 601 of cartridge 503. The data exchange between the two takes place by means of read control circuit 620, which is for sending data through a read only data bus from the electronic control device 503 side to the cartridge 503 side, by means of FIFO control circuit 623, which uses the same read control circuit 620 and passes data through FIFO memory 621, and by means of double bank control circuit 624, which makes it possible to read the data prepared by cartridge 503 from the electronic control device 501 side. FIFO memory 621 is a RAM that stores and reads data in a first-in-first-out sequence. In this embodiment, the M66252FP, manufactured by Mitsubishi Electric, was used.

In addition, as the signal lines to electronic control device 501, in data transfer controller 603, address bus CAB is connected through address buffer 617 and data bus CDB is connected through data buffer 619. Decoder number 1 (631), which receives the address bus CAB signal and cartridge selector signal CSEL and outputs selection signals to all areas in data transfer controller 603 is configured inside of data transfer controller 603. In the same manner, address bus AAB and control signal CCC, which are from microprocessor 601, are connected to data transfer controller 603; and decoder number 2 (632), which receives address bus AAB and outputs selection signals to the internal circuitry, is configured inside of data transfer controller 603. Furthermore, bus controller 635, which receives address bus AAB and control signal CCC and outputs address signals and control signals to ROMs 606 to 609 and RAMs 611 to 614 and to expansion RAM interface 615, is also configured inside of data transfer controller 603.

In addition to these, a variety of other registers are located in data transfer controller 603. In addition to the normal read and write operations, there are many registers that are automatically written to when special processing takes place. The configuration of these special registers will be described later. Viewed from the electronic control device 501 side, cartridge 503 is handled as a read only device and the registers that can be written to from electronic control device 501 are configured so that they can be written to by means of a read operation from a specified address.

That is, by specifying the specified address, a selection signal is output from decoder number 1 (631) and data is written to the register as a result of this signal. Reading from the registers takes place by means of the normal read cycle. Also, the data reading and writing from the microprocessor 601 side take place by means of the normal reading and writing operations. In Figure 22 the registers are drawn in a condition in which the they are connected to a bus that is readable. The write operations are simply indicated by arrows. As such registers, there are interrupt request register 640, polling command register 643, status register 645 (Figure 20 register STATUS), transfer flag register 647 (Figure 21 register BPOLL), PROM control register 649, and control register 650.

Among these registers, registers other than status register 645 and transfer flag register 647 represent a generic name of the multiple registers allocated as memory I/O maps for CPU 510 of electronic control device 501 or for microprocessor 601 of cartridge 503. These multiple registers are not necessarily allocated to consecutive addresses. Registers AMDINT O, 1 and 2 and AMD CLR 0,1 and 2, which are shown in Figures 20 and 21, belong to interrupt register 640. Registers POLL and register MCONTCS belong to polling command register 643.

All of the registers that do not belong to read control circuit 620, FIFO control circuit 623 or double bank control register 624 and were not mentioned in the above description, belong to control register 650. These are registers ADDMUXA, ADDMUXB, CLKDIV, RTCVAL, RTCON, RTCSEL, RTCCLR and SYSKEEP, which are shown in Figures 20 and 21.

Among the areas shown in Figures 20 and 21, areas EWWRL and EWWRH, which are each 512 bytes, are areas used for writing to latch number 1 (651) and latch number 2 (652) of read control circuit 620 from electronic control device 501. Register EWRD is equivalent to seeing latch 651 and latch 652 as one word from the microprocessor 601 side. Registers FIFOREQ, FIFORST and FOFOW are equivalent to FIFO register 653 of FIFO control circuit 623. Registers FIRCLK, RDCLK, FIFORD and RDRST are equivalent to FIFO read register 655 of FIFO control circuit 623. Also in FIFO control circuit 623 is latch 657, which maintains the data to be written to FIFO memory 621 using some of the functions of read control circuit 620.

The areas in Figure 20 that are indicated by the symbols DPRAMA and DPRAMB are buffers with a capacity of 32 bytes. They are equivalent to seeing buffer number 1 (658) and buffer number 2 (659) of double bank control circuit 624 from the electronic control circuit 501 side. These banks, DPWROA and DPWROB, which are shown in Figure 21, are what is seen when buffers 658 and 659 are viewed from the microprocessor 601 side. Specified bits d1 and d2 of status register 645 are also used for the data exchange that goes through double bank control circuit 624. Details on this will be provided later.

E. Description of All Registers

Interrupt request register 604 is the register that generates an interrupt request from electronic control device 501 to microprocessor 601 and then retains this. Three levels have been provided for the interrupts from electronic control device 501 to microprocessor 601. Figure 20 shows that three registers (AMDINT 0, 1 and 2) have been provided. An interrupt request to microprocessor 601 is generated by electronic control device 501 reading any of the registers of interrupt request register 640. This register is set by the read operation of electronic control circuit 501. However, the data read has no meaning and it is irrelevant to the generation of interrupt requests.

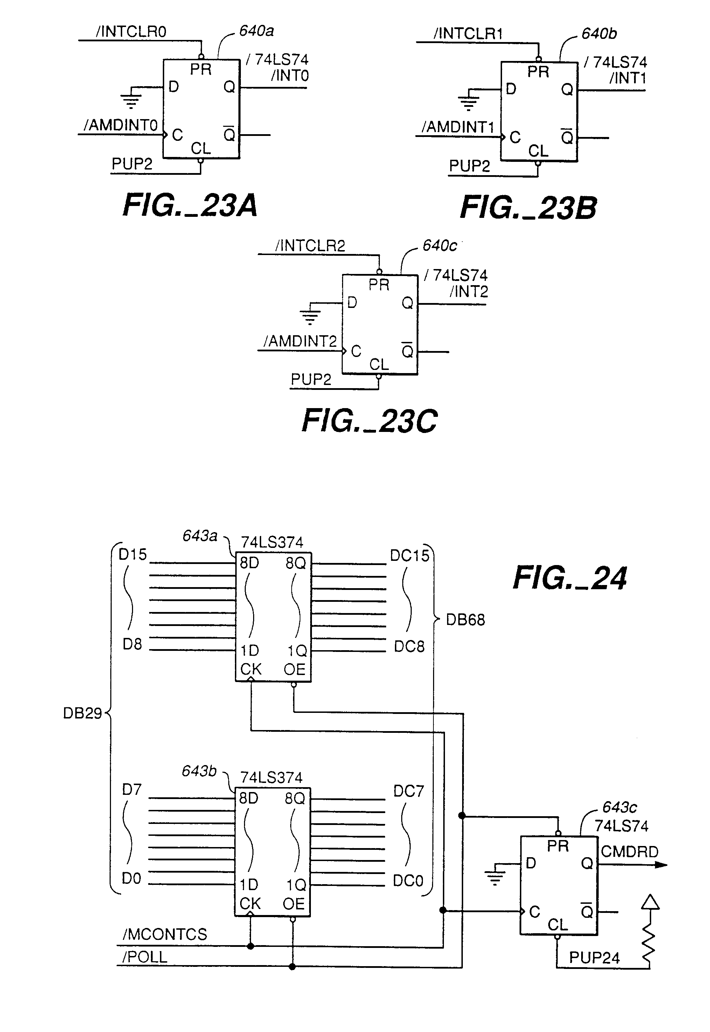

Figure 23 shows a specific example of the configuration of interrupt request register 640. These registers are made up of D type flip-flops. The output pin, Q, of each flip flop, numbers 640a, b and c, will be set to active low by means of the AMDINT 0, 1 and 2 signals that decoder number 1 (631) outputs through the register read operation described above, which is from electronic control device 501. The symbol [/] placed in front of the signal name indicates that the signal is active low (the same below). As shown in Figure 21, the registers that clear the output of flip flops 640a, b and c, have been allocated to specified addresses as three read only registers (AMDCLR 0, 1 and 2). As a result, when a read operation from microprocessor 601 to all of the addresses allocated to this register takes place, decoder number 2 (632) will output all of signals/INTCLR 0, 1 and 2 and the corresponding flip flops will be preset.

When an interrupt is originated from electronic control device 501, one of the registers of interrupt request register 640 must be accessed. Microprocessor 601 will determine the priority and perform the processing that applies to the interrupt request. In this case, microprocessor 601 will clear the corresponding interrupt request registers 640a, b and c. Signals that begin with the symbol PUP, as is the case for signal PUP2, are signals that are output from reset signal output circuit 637 and become low signals when there is a reset. Signal PUP2, which is shown in Figure 23, is a signal that clears three interrupt requests at one time.

Polling command register 643 is the register that passes commands from microprocessor 601 to electronic control device 501. It is a register that can be written to from the microprocessor 601 side and can be read from the electronic control device 501 side. Figure 24 shows a hardware configuration example of this register. As indicated in this drawing, polling command register 643 is composed of two octal D type flip flops, 643a and b, which form a data latch with a width of 16 bits, and one D type flip flop, 643c.

Data bus DB29 (bus width of 16 bits) from microprocessor 601 is connected to data input pins 1D to 8D of octal data flip flops 643a and b. Data bus DB68 (bus width of 16 bits) from electronic control device 501 is connected to its output pins, 1Q to 8Q. Signal/MCONTCS, which is output from decoder number 2 (632) when microprocessor 601 accesses polling command register 643 (Figure 21, register MCONTCS) is connected to clock pin CK of octal D type flip flops 643a and b. When this signal becomes active low, the content of data bus DB29 on the microprocessor 601 side will be latched to octal D type flip flops 643a and b. In addition, signal/POLL, which is output from decoder number 1 (631) when electronic control device 501 accesses polling command register 643 (Figure 20, register POLL) is connected to output enable pin OE, which enables the output of octal D type flip flops 643a and b. When this signal is active low, the data retained in octal D type flip flops 643a and b will be output to data bus DB68 of electronic control device 501.

Signal/MCONTCS and signal/POLL are connected to the clock pin C and preset pin PR of D type flip flop 643c. Signal CMDRD, which comes from its output pin Q, will be set to the high level when the latching of the data from octal D type flip flop 643a and b takes place (signal/MCONTCS is low) and reset to the low level when this data is read from electronic control device 501 (signal/POLL is low). CMDRD, which is a output signal of D type flip flop 643c, is specified bit d3 (also called flag CMDRD below) of a read enabled status register 645 on the electronic control circuit 501 side. Therefore, by reading status register 645 from electronic control circuit 501, electronic control circuit 501 is able to know from microprocessor 601 that the command code has been set in polling command register 643.

When electronic control circuit 501 looks at flag CMDRD, which is bit d3 of status register 645, and finds out that a command has been placed there, electronic control circuit 501 will read the content of polling command register 643 by means of the normal read cycle. That is, it will read the command sent from microprocessor 601. The commands will be, for instance, a command to start transferring print data to data transfer controller 603 or a command to start printing or a command to display messages on console 518. As shown in Figure 24, when electronic control circuit 501 reads the content of polling register 643, CMDRD, which is the output signal of flip flop 643c, will reverse to the high level by means of signal/POLL. Therefore, by observing specified bit d2 of transfer flag register 647, microprocessor 601 will be able to know whether or not the command it output was read by electronic control circuit 501.

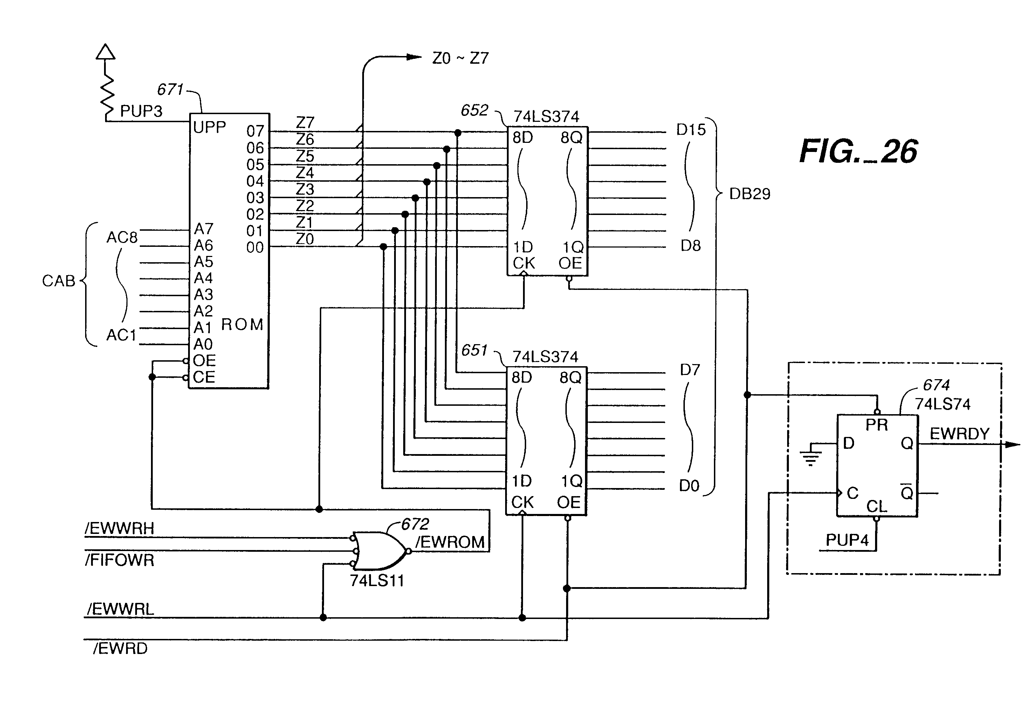

In addition to the data described above, which shows whether or not a command has been placed in the register by microprocessor 601, status register 645 also retains the data shown in Figure 25. A description of the content of each bit will now be given. Bit d0 will be set to the low level by signal EWRDY, which is generated within read control circuit 620 when data is written from the electronic control circuit 501 side to read control circuit 620, which will be discussed later. When that data is read by the microprocessor 601 side, bit d0 will be set to the high level by a signal from decoder number 2 (632). This bit is called flag EWRDY. Bits d1 and d2 will indicate that double bank control circuit 624 has become access enabled either from

electronic control circuit 501 or from microprocessor 601. The respective flags are called ADDMUXA and ADDMUXB. The two bits correspond to the two transfer banks built into double bank control circuit 624. As shown in Figure 21, bits d1 and d2 are set and reset by microprocessor 601 writing data to bit d0 of registers ADDMUXA and ADDMUXB, which are contained in control circuit 650. Therefore, before writing data to one of the banks of double bank control circuit 624, microprocessor 601 sets the flag to the low level and then resets it to the high level after the writing is finished. Assuming electronic control circuit 501 reads data from the bank side in which this flag is set to the high level, by writing to and reading the data to the two banks alternately, microprocessor 601 can connect to the electronic control circuit 501 side and pass data.

Bit d3 (flag CMDRD) already has been described. Bit d5 is flag CLKDIV, which is set based on the operating clock of microprocessor 601. Clock CLK, which is output from oscillator number 1 (661) which uses externally connected liquid crystal vibrator CRC1 is used as the operating clock of microprocessor 601. However, if a value of zero is written to specified bit d0 of register CLKDIV of control register 650 from microprocessor 601, the microprocessor 601 operating clock will become 25 MHz. If a one is written to bit d0, the operating clock will become 12.5 MHz. Flag CLKDIV of status register 645, when viewed from electronic control circuit 501, will be set to the low level when clock CLK is at 25 MHz and set to the high level when clock CLK is at 12.5 MHz. Electronic control circuit 501 will check this bit in status register 645 when it is necessary to know the operating clock frequency, that is, to know the operating speed, of microprocessor 601 in order to match the timing of the data transfer, etc.

Bit d6 is flag ADMON, which is set to the high level when microprocessor 601 is operating and set to the low level when microprocessor 601 enters the sleep mode. In this embodiment, microprocessor 601 receives the page description language from electronic control circuit 501 and then performs the processing to develop this into image data. Therefore, if the page description language that should be sent from electronic control circuit 501 does not come and a specified amount of time elapses, microprocessor 601 will switch to one half the initial operating frequency, that is, 12.5 megahertz, in order to conserve power. If more time elapses, it will stop itself from operating and enter the sleep mode. At this time, microprocessor 601 will write a zero in register ADMON of control register 650. As a result, viewed from the side of electronic control circuit 501, bit d6 of status register 645 will enter the low level, and electronic control circuit 501 will be able to know the operating mode of microprocessor 601 by checking this bit.

For such time measurements, the real time clock built into data transfer controller 603 is used. For clock RCLK, which is for use as a real time clock, the clock from oscillator number 2 (667), which is formed using externally attached liquid crystal vibrator 665, is used. The real time clock is formed inside of bus controller 635 and measures the elapse of the specified time by receiving commands from microprocessor 601. The reason two sets of liquid crystal vibrators and oscillators have been provided is to make the operating clock CLK of microprocessor 601 independently changeable from real time clock operating clock RCLK.

By making bit d1 of registers RTCVAL and RTCSEL, which belong to control register 650, low or high, the real time clock can specify four types of interval timers. By writing the value one to specified bit d0 of register RTCON, that timer can be started. A timer that has been started up will output an interrupt signal to microprocessor 601 for the specified interval until a zero is written to bit d0 of register RTCON and the clock stops. When microprocessor 601 receives this interrupt request signal, it will read register RTCCLR and clear the interrupt request. The output of these interval timers are used for counting user time, etc., of the page description language processing.

Next, the configuration of PROM control register 649 will be described. The three registers shown in Figure 21 are contained in PROM register 649. They are registers EEPCS, EEPSK and EEPDI. These registers are used for the data exchanges of EEPROM 670, which is memory that is built into cartridge 503 and electrically erases and changes data.

Cartridge 503 of this embodiment stores the variables (configurations) required for the operation of laser printer 500 in EEPROM 670. EEPROM 670 is the type of EEPROM that performs reading, deletion and rewriting of the data by means of serial transfer. In this embodiment, the NMC93C66X3 manufactured by National Semiconductor is used. EEPROM 670 has a memory capacity of 16 bits by 256 bytes (registers) and is able to read, delete or write to a specified optional register. When set to the select condition by chip select signal CS, EEPROM 670 will simultaneously input the [0] and [1] data to be sent to serial data input pin Din. However, the first three bits of the data transfer will be interpreted as a command to the EEPROM, and the next 8 bits will be interpreted as the register number of the of the data to be read, erased or written. In the case of writing data, following these commands and register specifications, the data that is supposed to be simultaneously stored with the serial data clock will be sent to data input pin Din.

Register EEPCS switches the chip select signal. When microprocessor 601 writes a zero to bit d0 of this register, EEPROM 670 enters the select condition. Register EEPSK is the register that generates serial clock SK. When microprocessor 601 generates a serial data clock for EEPROM 670 by alternately writing pros and ones to this register. Register EEPDI is the register that retains the one bit data that is to be written to EEPROM 670. When microprocessor 601 generates serial data clock SK by rewriting register EEPSK, it simultaneously rewrites specified bit d0 of register EEPDI based on the data that is supposed to be rewritten. Data output pin Dout of EEPROM 670 is the specified bit d0 of transfer flag register 647, which was previously described. After outputting the data read command and the number of the register to be read to EEPROM 670, if microprocessor 601 reads bit d0 of transfer flag register 647 at the same time as the serial data clock, it can read the content of the specified register. Since the data stored in EEPROM 670 will be retained even if the power is turned off, the configuration just before the power was turned off can be restored by the reading of the content of EEPROM 670 immediately after the power of laser printer 500 is turned on.

F. The Configuration and Operation of Read Control Circuit 620

Next, read control circuit 620 and the data transfer steps of read control circuit 620 will be described. As shown in Figure 26, read control circuit 620 is composed of two 8-bit latches, latch number 1 (651) and latch number 2 (652), ROM 671, which outputs data required for transfer, 3-input AND gate 672, and D type flip flop 674, which generates flag EWRDY (bit 0) of status register 645. Viewing read control circuit 620 from the side of electronic control circuit 501, as shown in Figure 20, latches 651 and 652 are equivalent to two registers, register EWWRL and register EWWRH, which transfer data in 8-bit units. These registers are used to transfer the low end bytes (EWWRL) and high end bytes (EWWRH), respectively, of data in which one word is equal to 16 bits. Viewed from microprocessor 601, latch number 1 (651) and latch number 2 (652) are equivalent to register EWRD, which is shown in Figure 21. That is, microprocessor 601 can read both latches, 651 and 652, as one word through data bus DB290.

ROM 671 of read control circuit 620 is a ROM that stores 256 byte data. It can be formed by a fuse ROM or a small capacity PROM, for example. Of course, it also can be formed of a portion of a large capacity ROM. If using a RAM, the same function can be obtained by transferring the data in advance. Among the address lines from connector address bus CAB, the low end 8 bits (AC1 to AC8) are connected to address lines A0 to A7 of ROM 671. Data pins 00 to 07 are connected to the input side, 1D to 8D, of latch number 1 (651) and latch number 2 (652). The output of ROM 671 is also output to FIFO control circuit 623 as data buses Z0 to Z7, which for FIFO control circuit 623 are its data buses.

The output side of latch number 1 (651) and latch number 2 (652) is connected to data bus DB29, which for microprocessor 601 can be read as register EWRD. The output signal/EWROM of 3-input AND gate 672 is input to chip select CE and the output enable OE of ROM 671. When either of signal/EWWRH, signal/FIFOWR or signal/EWWRL, which are input to each of the inputs of 3-input AND gate 672, become active low, ROM 671 will output the address data specified by the low end 8 bits of connector side address bus CAB.

Signal/EWWRH is the signal that becomes the low level when the transfer of the high end bytes is specified by read control circuit 620. Likewise, signal/EWWRL is the signal that becomes the low level when the transfer of the low end bytes is specified. Signal/FIFOWR is the signal that becomes low level when the transfer of data is specified by FIFO control circuit 623. Since signal/EWWRL and signal/EWWRH are input to clock pin CK of latch number 1 (651) and latch number 2 (652), respectively, when these signals become active and data is output from ROM 671, that data will be retained in latch number 1 (651) and latch number 2 (652). Furthermore, because signal/EWWRL also has been input to clock pin C of D type flip flop 674, output Q of D type flip flop 674 will reverse to the low level when the low end bytes are transferred. Output EWRDY will be handled as bit d0 of status register 645, which already has been described, and bit d1 of transfer flag register d1. That is, it will be handled as flag EWRDY.

Latch number 1 (651) and latch number 2 (652) will be handled as register EWRD by microprocessor 601. Therefore, microprocessor 601 will carry out a read operation toward register EWRD when it attempts to read the data in latch number 1 (651) and latch number 2 (652). At this time, signal/EWRD will become active low and

the data that was retained first will be output to the output side of latch number 1 (651) and latch number 2 (652), which are connected to the output enable pin. That is, data that was retained first will be output to data bus DB29. Because signal/EWRD is connected to preset pin PR of D type flip flop 674, at the same time that microprocessor 601 reads the data of latch number 1 (651) and latch number 2 (652), signal EWRDY, which is the Q output of D type flip flop 674, will reverse to the high level. That is, flag EWRDY, which is bit d0 of status register 645 and bit d1 of transfer flag register 647, will be set to one.

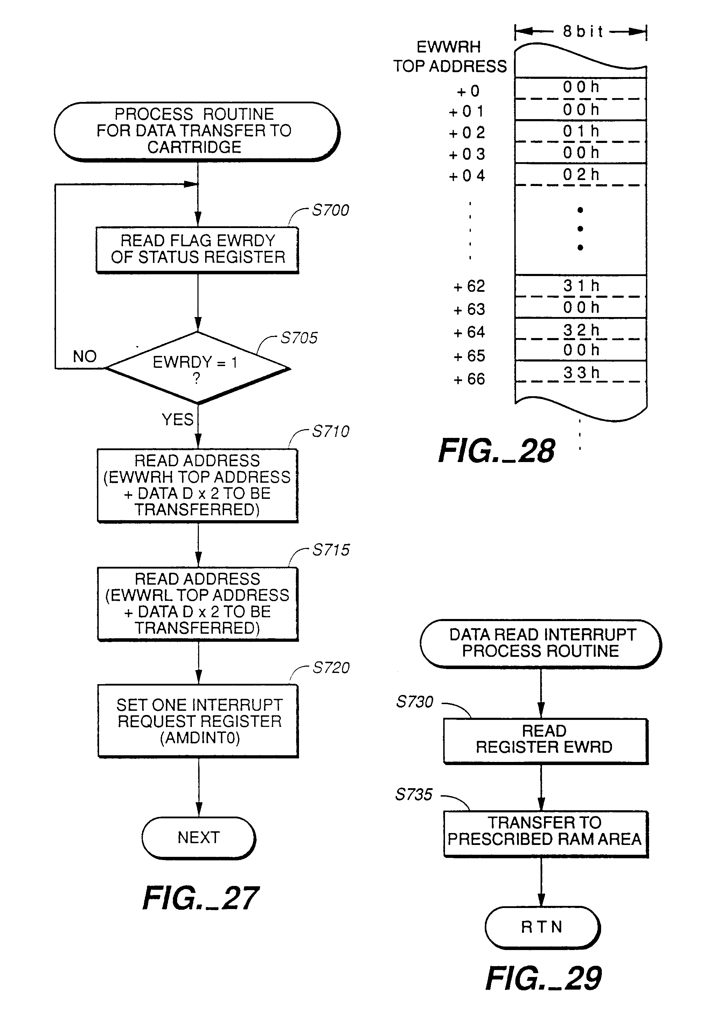

Assuming this type of hardware, electronic control circuit 501 and microprocessor 601 conduct the transfer of data from electronic control circuit 501 to microprocessor 601 under the following procedures. The data to be transferred from electronic control circuit 501 to microprocessor 601 will be the print data that electronic control circuit 501 received from work station 507 and the page description language program that is to be processed by microprocessor 601 of cartridge 503. The data transfer brought about by read control circuit 620 will take place by means of the data transfer routine (Figure 27) that CPU 510 of the electronic control circuit 501 side will execute and by means of the data read interrupt processing routine (Figure 29) that microprocessor 601 of the cartridge 503 side will execute.

When the print data to be transferred to cartridge 503 has been prepared, the processing shown in the flow chart of Figure 27 will start up. First will be processing (step S700) that will read flag EWRDY (bit d0) of status register 645. Flag EWRDY will be set to zero when data is put into latch number 1 (651) and latch number 2 (652). When that data is read by microprocessor 601, it will be set to one. Thus, a determination can be made as whether flag EWRDY is one or not (step S705).

A standby will take place until flag EWRDY becomes one. When flag EWRDY does become a one, the processing (step S710) that reads the next address (the first address of area EWWRH plus the Dx2 of the data to be transferred) will take place. When the read processing takes place for area EWWRH, data will be read from ROM 671. As shown in Figure 28, the 256 bit data, have been written in sequence in the even number EWWRH addresses, from 00h to FFh, in ROM 671. The reason for no data in the odd number addresses is because it is basic that the CPU 510 data access take place as 1 word (16 bits). This is because access of words that begin with odd number addresses (an element of address bus errors) is not possible. When read processing takes place for an address Dx2 away from the first address of area EWWRH, data is read from ROM 671 and is latched to latch number 2 (652), as shown in Figure 26.

In this manner, when the transfer of the high end bytes of data to be transferred (data retained by latch number 2 (652)) takes place, CPU 510, in the same manner, transfers the low end bytes (data retained by latch number 1 (651)) (step S715). When one word of data has been retained in latch number 1 (651) and latch number 2 (652) using the processing mentioned above, CPU 510 will conduct the processing to set one (in the embodiment AMDINT 0) of the interrupt request registers (step S720).

CPU 510 will continue to execute the transfer routine shown in Figure 27. However, when the data retention takes place by means of latch number 1 (651), flag EWRDT will be set to the low level, as indicated in Figure 26. Therefore, the transfer processing for the next data will not take place until flag EWRDY is set to the high level (1) (steps S700 and S705)

When CPU 510 sets an interrupt request register (AMDINT 0), microprocessor 601 will receive this interrupt request and start up the data read interrupt routine shown in Figure 29. This processing will start up right after the data is retained in latch number 1 (651) and latch number 2 (652) of read control circuit 620. Microprocessor 601 will read the one word of data prepared by electronic control circuit 501 (step S730) by reading register EWRD. After that, microprocessor 601 will transfer the data it read to the specified areas of RAMs 611 to 614.

Using the processing described above, electronic control circuit 501 is able to transfer data to cartridge 503, which is only connected to data bus CDB, which is a read only line. In addition, because the data writing takes place in byte units and the reading takes place in word units, microprocessor 601 can take in data effectively. Here, an example of transferring one word of data was used. However, it is not necessary that the data transfer take place in a unit of one word. It may also take place in a byte unit. In such a case, only the transfer using area EWWRL takes place and the high end 8 bits of data may be discarded on the microprocessor 601 side.

G. The Configuration and Operation of FIFO Control Circuit 623

FIFO control circuit 623 is equipped with latch 657, which latches data to be written to FIFO memory 621, FIFO write register 653, which controls the writing of data to FIFO memory 621, and FIFO read register 655, which controls the reading of the same. FIFO memory 621 can store 1,152 bytes of data and internally has a write address counter and a read counter. Internally, FIFO memory 621 has been provided with a write reset pin, a read reset pin, a write 8-bit data bus, a read 8-bit data bus, a write clock pin and a read clock pin, all of which reset the respective write and read counters.

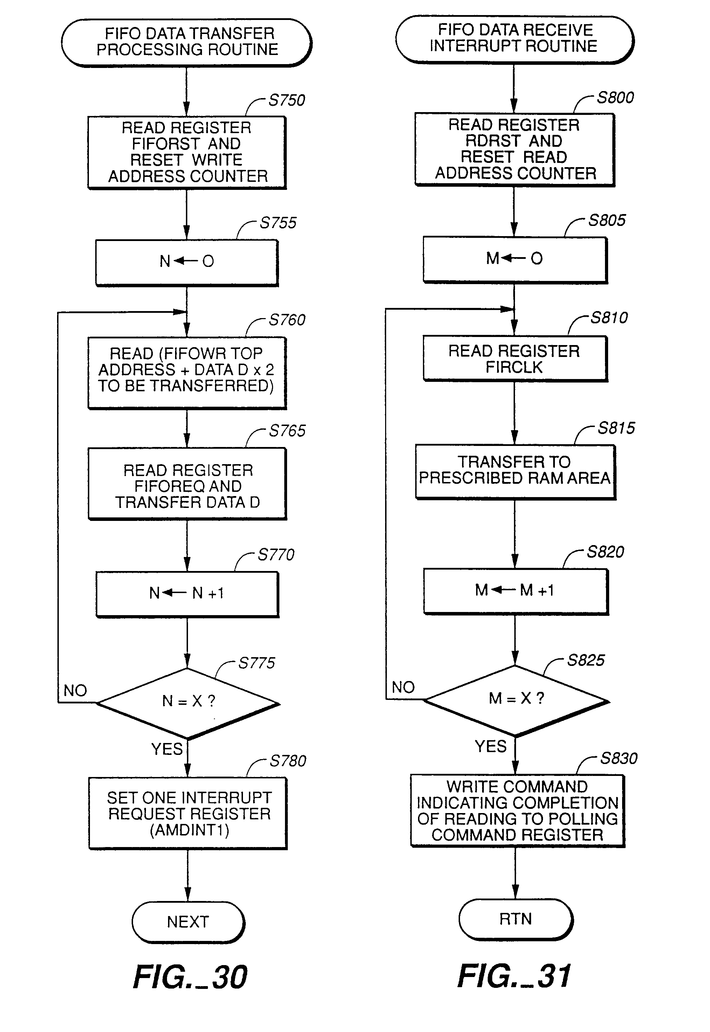

In order to use FIFO memory 621 to transfer data from electronic control circuit 501 to microprocessor 601, CPU 510 of electronic control circuit 501 will execute the transfer routine indicated in Figure 30, and microprocessor 601 will execute the processing routine indicated in Figure 31. The processing routine shown in the flow chart of Figure 30 will be described first.

CPU 510 of electronic control circuit 501 will transfer data of several bytes using FIFO control circuit 623. When CPU 510 of electronic control circuit 501 starts up the data transfer routine shown in Figure 30, first of all, processing to read register FIFORST, which belongs to FIFO write circuit 654 of FIFO control circuit 623, will take place. And processing to reset the address counter on the write side also will take place (step S750). Next, variable N will be reset to zero (step S755) in order to count the number of data to be transmitted. After that, the processing to read the address (the first address of register FIFOWR plus the data to be transferred Dx2) (step 760) will take place. As with read control circuit 620, when this address is read, the specified address of ROM 671 will be accessed (see Figure 28) and data D, which CPU 510 is attempting to transfer, will be output and this will be latched by means of latch 657 through buses Z0 to Z7, which are shown in Figure 26.

Next, the register FIFOREQ of FIFO control circuit 623 will be read and data D, which is retained in latch 657, will be processed for transfer to FIFO memory 621 (step S765). When register FIFOREQ is read, the write lock will be output to the FIFO memory 621 write clock pin. Data D, which is retained in latch 657, will be written to the address indicated by the write address counter of FIFO memory 621. At the same time, the content of the write address counter inside of FIFO memory 621 will increment a value of one only. One byte of data being written in this manner, variable N, which indicates the number of data to be transferred, will increment a value of one only (step S770) and a determination will be made as to whether or not variable N is equal to the total number of bytes X of the data that is to be transferred (step S775). As a consequence, the processing described above, steps S760 to S775, will be repeated until the total number of bytes N of the transfer data is equal to the total number of data X.

When the transfer of all of the data has been completed, CPU 510 will set one of the interrupt request registers (AMDINT 1) and notify microprocessor 601 that the transfer of data has been completed (step S780). It will then pass through NEXT and this processing routine will end.

Microprocessor 601 will receive interrupt request AMDINT 1 and start up the data receive interrupt routine that is represented in the flow chart in Figure 31. When the routine is started up, microprocessor 601 will first read register RDRST, which belongs to FIFO read register 655 of FIFO control circuit 623. It will then carry out the processing that resets the address counter on the read side of FIFO memory 621 (step S800). Next, processing will take place to place a zero in variable M in order to counter the number of data received. (step 805).

After that, processing to read register FIRCLK, which belongs to FIFO read register 655, will take place (step 810). Then processing to transfer the data that was read to specified areas of RAMs 611 through 614 will take place (step 815). When register FIRCLK is read, a read clock will be output to the clock pin of the read side of FIFO memory 621 and the address data, which indicates the address counter of the read side at that time, will be read. At the same time, the content of the address counter on the read side of FIFO memory 621 will move one increment. Because the program of the page description language is what is usually transferred through FIFO control circuit 623, the data received will be transferred immediately to the

# EP 0 604 650 A1

specified area of the RAM to be made ready for the development of the image data.

When one byte of data is received, variable M will move one increment (step 820) and determine whether or not it is equal to the number of total bytes X that data variable M will transfer (step 835). Thus, the processing described above in steps S810 to S825 will repeat until number of bytes M of the data received matches the total number of data X.

When it is determined that the reception of all of the data is complete, microprocessor 601 will carry out processing to write a command that indicates that the reading of the data has ended in polling command register 643 (step S630). CPU 510 of electronic control circuit 501 can know of the end of the data reception by reading the content of polling command register 643. After that, microprocessor 601 will go through RNT and end this processing routine.

A lot of data can be effectively transferred from electronic control circuit 501 to microprocessor 601 by means of the processing described above. The data that is transferred will be retained in the specified area of RAMs 611 to 614 of data transfer controller 603 and wait for processing by microprocessor 601. When microprocessor 601 receives from electronic control circuit 501 all of the print data (as described program using a page description language) that is to be developed, it will start up the page description language interpreter stored in ROMs 606 to 609 and process this print data, which is stored in the specified areas of RAMs 611 to 614. The image development will take place by means of such processing and the results of the development will be stored as image data in the specified areas of RAMs 611 to 614.

## H. The Configuration and Operation of Double Bank Control Circuit 624

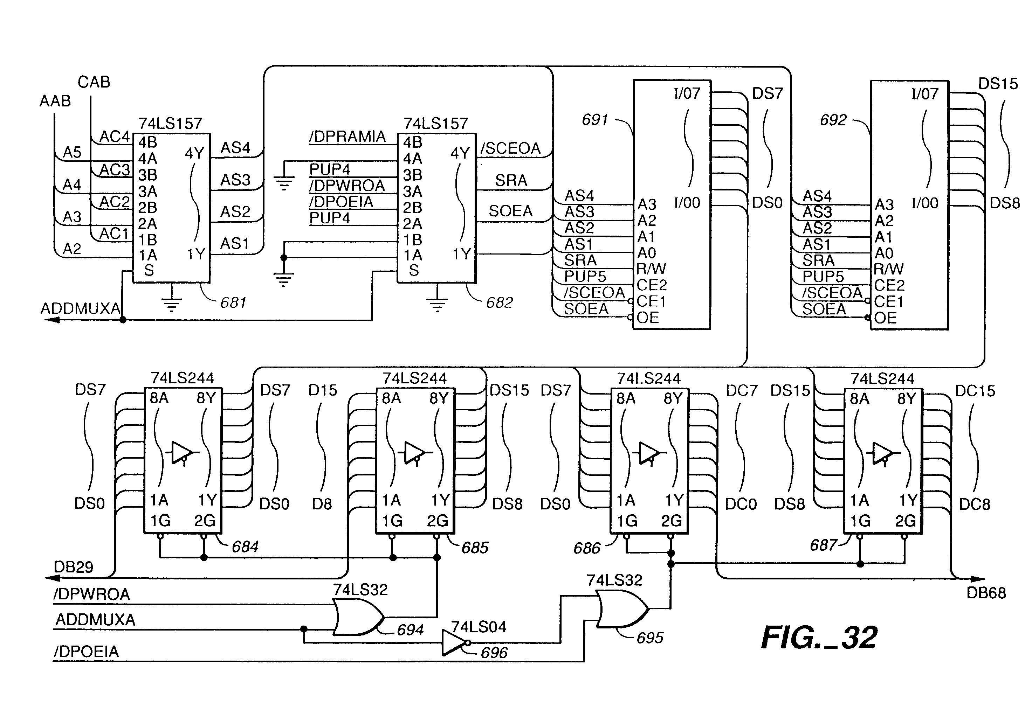

The image data gained when the image development ends is next transferred to electronic control circuit 501 and store there in RAM 512 to be printed by laser engine 505. This image data transfer takes place by means of double bank circuit 624. Double bank circuit 624 is transferred from microprocessor 601 to electronic control circuit 501 and is equipped with two banks that store 32 bytes (16 words) of data. These are called bank A and bank B. As hardware, they are exactly the same. An example of the configuration of bank A only is shown in Figure 32.

Each bank is of a configuration that allows the switching of the address buses and data buses from microprocessor 601 and from electronic control circuit 501. As indicated in the drawing, they are composed of data selectors 681 and 682, which select the address lines, a total of two sets of octal line buffers, four octal line buffers 684 to 687, which are used as two units per one set and select the data bus (16 bit width), RAMs 691 and 692, which have a 32 byte memory capacity, and miscellaneous gates as OR gates 694 and 695, and inverter 696. In Figure 32, the configuration is such that two memory chips with a memory capacity of 32 bytes are used. However, there is no problem with creating them by switching the high end addresses of a single memory chip.

Data selector 682 is configured so that it selects and outputs the low end 4 bits (AC1 to AC4) of address bus CAB of electronic control circuit 501 and the low end 4 bits (A2 to A5) of microprocessor 601. The address but selection takes place by means of signal ADDMUXA (register ADDMUXA bit d0), which is connected to select pin S. Data selector 682 switches the read and write signals of RAM 691 and 692 to match the selection of the address bus and switches whichever signal is connected to chip select pins CE 1 and 2 and output enable pin OE by means of signal ADDMUXA, which are connected to the same select pin S.

Octal line buffers 684 and 685 are tri-state line buffers that are mounted on data bus DB29. When gate pins 1G and 2G are at the low level, data bus DB20 of microprocessor 601 and the data buses of RAMs 691 and 692 connect, making it possible for data to be written from microprocessor 601 to RAMs 691 and 692. The output of OR gate 694, which inputs signal/DPWROA and signal/ADDMUXA, is connected to gate pins 1G and 2G of octal buffers 691 and 692. Signal/DPWROA is the signal that becomes low when microprocessor 601 attempts to write data to bank A. Therefore, to write data to bank A, if bit d0 of register ADDMUXA is set low in advance, when microprocessor 601 conducts the processing to write data to bank A, the gates of octal line buffers 684 and 685 will open and the data output to data bus DB29 will be output to the data buses of RAMS 691 and 692 and written there.

When the gate pins 1G and 2G of octal buffers 686 and 687 become low, data bus DB68 of electronic control circuit 501 and the data buses of RAMs 691 and 692 will connect and it will be possible to read data from RAMs 691 and 692 to electronic control circuit 501. The output of OR gate 695, which has as input the signals that reversed signal/DPOE1A and signal ADDMUXA using inverter 696, is connected to gate pins 1G and 2G of octal line buffers 686 and 687. Signal/DPOE1A is the signal that becomes low when electronic control circuit 501 attempts to read the data of bank A. Therefore, to read the data of bank A, if bit d0 of register ADDMUXA is set in advance to the high level, when read processing takes place from electronic control circuit 501 to bank A, the gates of octal line buffers 686 and 687 will open and the data that was output to the data buses of RAMs 691 and 692 will be output to data bus DB68.

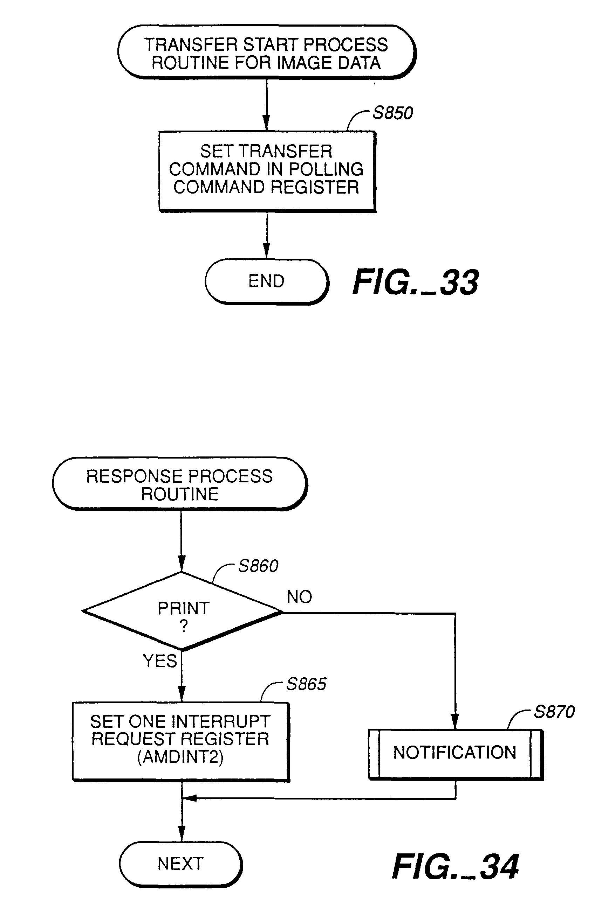

Assuming this type of hardware, the transfer processing of the image data by microprocessor 601 conducts and the processing to receive it that CPU 510 of electronic control circuit 501 conducts will be described. Figure 33 is a flow chart that shows the transfer start processing routine of the image data, which is executed by microprocessor 601. As shown in the drawing, before the transfer of the image data, microprocessor 601 places a transfer start command in polling command register 643 (step S850).

CPU 510 of electronic control circuit 501 will read the command of polling command register 643 and execute the response processing routine shown in Figure 34. That is, electronic control circuit 501 will determine if laser printer 500 is print enabled or not (step S860). If it determines that it is print enabled, it will set one of the interrupt request registers (AMDINT 2) (step S865) and pass through NEXT and temporarily end the current routine. If it determines that it is not in the print condition, it will conduct processing to notify microprocessor 601 of cartridge 503 of this (step S870). Not being in the print condition means it is in a condition in which it cannot print even if it received the image data transfer. For example, this could be a condition in which laser engine 505 is not still warmed up or a condition in which there is a paper jam.

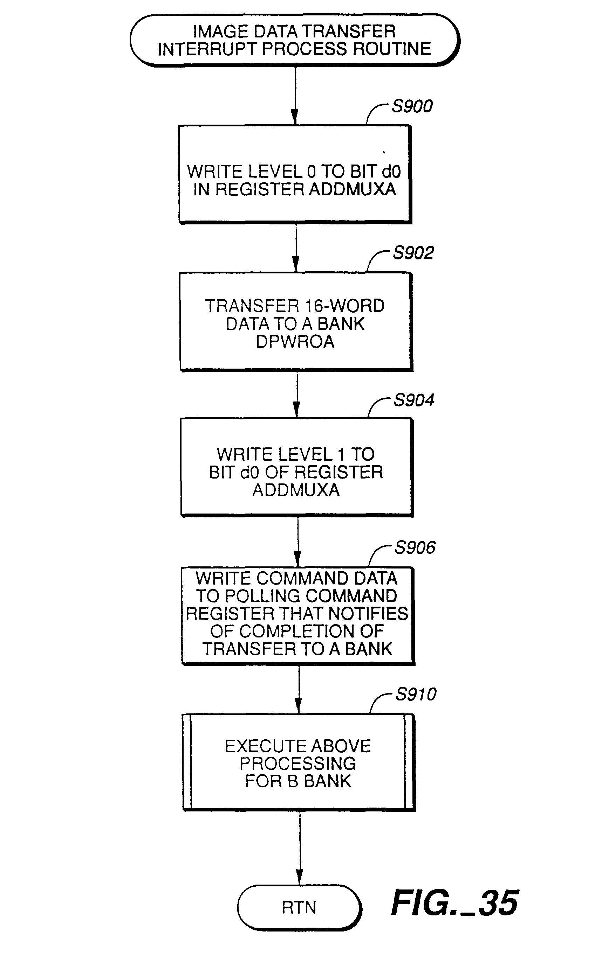

When it receives interrupt request signal AMDINT 2 from electronic control circuit 501, microprocessor 601 will start up the image data transfer interrupt routine shown in Figure 35. When this processing is started up, microprocessor 601 will first conduct the processing to write a one to bit d0 of register ADDMUXA (step S900). When bit d0 of register ADDMUXA is one, as described using Figure 32, the data buses of RAMs 691 and 692, which form bank A will be connected to data bus DB29 of microprocessor 601 and the condition will be such that an access from electronic control circuit 501 cannot take place.

Next, microprocessor 601 will conduct processing to transfer 16 words (32 bytes) of data to bank A DPWR0A (step S902). When the writing of data to bank A DPWR0A takes place, signal/DPWR0A, which is shown in Figure 32, will become the low level and data will be written to RAMs 691 and 692 through octal buffers 684 and 685. When the transfer of the 16 words of data ends, microprocessor 601 will write a one to bit d0 of register ADDMUXA (step S904) and connect the data buses of RAMs 691 and 692, which form bank A, to data bus DB68 of electronic control circuit 501.

After that, microprocessor 601 will conduct processing to write command data that notifies polling command register 643 of the end of data transfer to bank A (step S906). The transfer processing for bank A will end with the above and microprocessor 601 will next execute the same processing described above for bank B (step S910). when the transfer of data to bank B ends, in the same manner, microprocessor 601 will write command data that notifies polling command register 643 that the transfer has ended. In this manner, the transfer of a total of 32 words (64 bytes) of data from cartridge 503 to banks A and B will end.

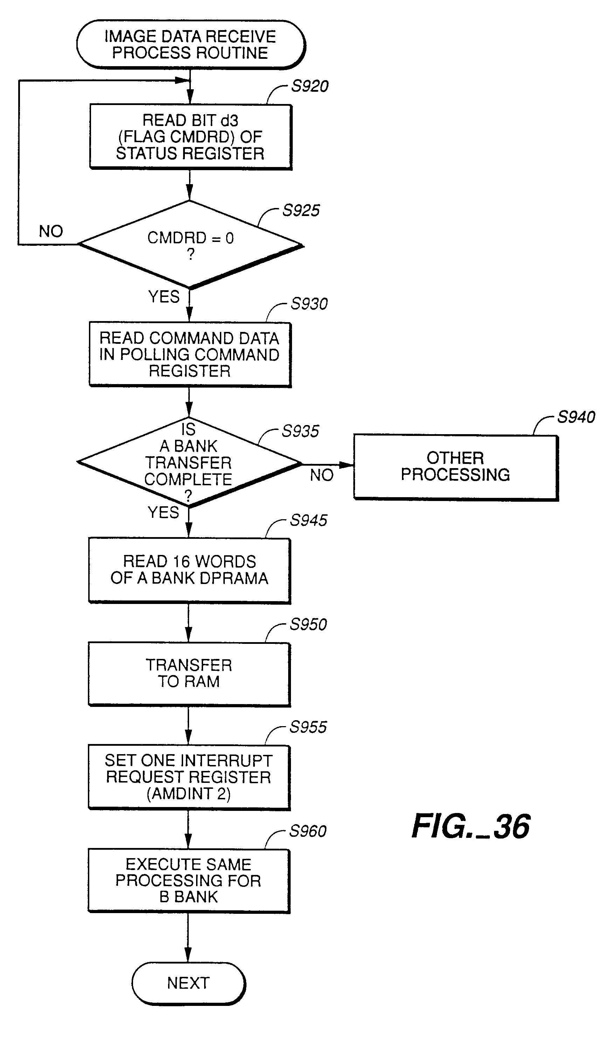

CPU 510 of electronic control circuit 501 will execute the image data reception routine shown in Figure 36 for the microprocessor 601 processing described above. That is, CPU 510 will first read bit d3 of status register 645. That is, it will read flag CMDRD (step S920) and determine if this is set at zero or not (step S925). When command data is to be written from microprocessor 601 to polling command register 643, flag CMDRD will be set to zero. At this time, CPU 510 will read the command data of polling command register 643 (step S930).

It will then check the command data to determine if it is command data that indicates the end of data transfers to bank A or not (step S935). If it is not, it will execute the other processing (step S940). If the command data of polling command register 643 indicates the end of data transfer to bank A, electronic control circuit 501 will conduct processing that reads the 16 words of bank A DPRAMA (see Figure 20) (step S945) and transfer the data that was read to RAM 512 (step S950).

The reading of the 16 word data of bank A will end as a result of the processing above. Then, electronic control circuit 501, which permits the transfer of the next 16 words from microprocessor 601, will set one of the interrupt request registers (AMDINT 2). Next, the processing of steps S920 to S955 described above will be executed for bank B. That is, when [electronic control circuit 501] determines from the command data of polling command register 643 that the data transfer from microprocessor 601 for bank B has ended, after it reads the 16 word data of bank B DPRAMB and transfers this to RAM 512, it will set one of the interrupt request registers and request an interrupt of microprocessor 601.

Since microprocessor 601 will once again execute the interrupt processing routine shown in Figure 35 when it receives such an interrupt request, the transfer of all data will end by means of microprocessor 601 and CPU 510 executing both routines (Figure 35 and Figure 36). After the transfer of all of the image data, if new print data is not received from electronic control circuit 501, microprocessor 601 will write a one in register CLKDIV of control register 650 when the specified amount of time has elapsed and cut its own operating frequency in half to 12.5 MHz, reducing its power consumption and, thereby, reducing its generation of heat.

I. Printing of Image Data

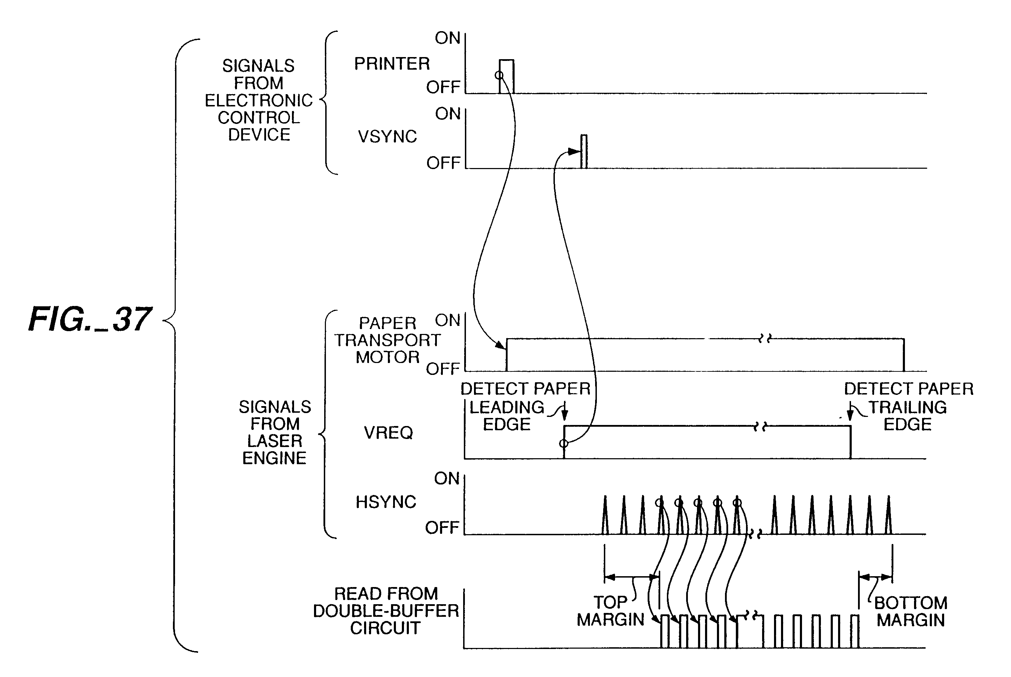

Electronic control circuit 501, which receives all of the image data, will exchange signals with laser engine 505 using double buffer 520 and register 517, which already have been described, and then print the image data. The exchange of signals between electronic control circuit 501 and laser engine 505 is shown in simple form in Figure 37. A general description of the printing will be given referring to the drawing.

When electronic control circuit 501 receives image data after it has been developed from cartridge 503, it will inquire concerning whether laser engine 505 is in a condition that will allow printing. After the warm up has ended and it is determined to be print enabled, the signal shown in Figure 37 will be output to laser engine 505 through register 517. Laser engine 505 will receive this signal and immediately start up the paper transport motor, At the same time, the rotation of the photosensitive drum will begin, as will the processing of the electrostatic charge, etc.

When the paper on which the printing will take place has reached a specified distance relative to the photosensitive drum, laser engine 505 will sense the leading edge of the paper and output signal VREQ to electronic control circuit 501 through register 517. When electronic control circuit 501 receives this signal VREQ, it will standby for a specified amount of time. That is, it will standby for the time required for the photosensitive drum to rotate to the position that starts the latent image formation using the laser beam. It will then output signal VSYNC through register 517. Laser engine 505 will receive this signal VSYNC and then output the laser beam horizontal synchronization signal HSYNC through register 517. Because signal VSYNC is the equivalent of a signal that commands the start of the reading of one line of image data, laser engine 505 will read the image data from one of the RAMs, 520A or 520B, of double bank buffer circuit 520 at the same time that the signal is received. When a top margin is to be formed, control that ignores signal VSYNC for the number of line required for the top margin takes place. This control is the same when forming a bottom margin.

At the same time, CPU 510 will count the signals and transfer the required image data to RAM 520A or RAM 520B of double buffer circuit 520. CPU 510 will end the transfer of image data to double buffer 520 either when a specified amount of time has elapsed after laser engine 505 detects the back end of the paper or when the horizontal synchronization signal count equals the value that was matched and set in advance to the paper size. One page of image data will be transferred to laser engine 505 and that image will be printed on paper by means of the above processing.

[iii] Miscellaneous

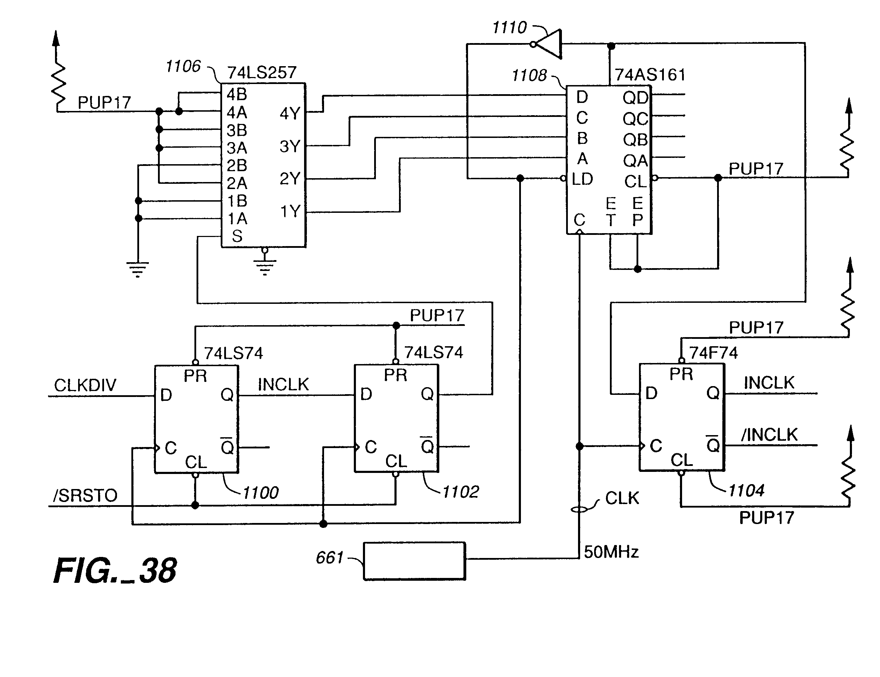

(1) As stated above, after all of the image data has been transferred, microprocessor 601 will enter the sleep mode after electronic control circuit 501 has sent no new print data for a specified amount of time. That is, it will cut its own operating frequency in half to 12.5 MHz. Figure 38 is a block diagram that shows the circuit for switching the frequency of clock signal INCLK of microprocessor 601 based on clock signal CLK of 50 MHz oscillator 661. The frequency switching circuit is composed of three D type flop flops, 1100, 1102 and 1104, data selector 1106, 4-bit binary counter 1108, and inverter 1110.

The input pins of data selector 1106 are each pulled up or pulled down. As a result of this, data 1110 is sent to input pin group number 1, 4A to 1A, and data 1100 is sent to input pin group number 2, 4B to 1B. The Q output of D type flip flop number 2 (1102) is sent to the select input pin of data selector 1106. When select pin S is at the low level, it will output the data of input pin group number 1, 4A to 1A. When select pin S is at the high level, it will output the data of input pin group number 2, 4B to 1B.

When microprocessor 601 is operating, the value of register CLKDIV is zero and the Q output of D type flip flop number 2 (1102) will be maintained at the low level. As a result, data [1110] of input pin group number 1, 4A to 1A, of data selector 1106 is sent to counter 1108 as a preset value. Counter 1108 counts the 50 MHz clock signals provided from oscillator 661. At this time, the preset value is 1110. Therefore, counter 1110 will function at 1/2 minute cycles. The carry output of counter 108 is sent to the D input pin of D type flip flop number 3 (1104) and is output to pin Q at the same time as clock signal CLK. As a result, the 50 MHz signals of oscillator 661 will operate at 1/2 minute cycles and be output from D type flip flop 1104 as 25 MHz clock signal INCLK.

When microprocessor 601 does not operate for a set amount of time, the value of register CLKDIC will be changed to a one and the data 1100 of input pin group number 2, 4B to 1B, of data selector 1106 will be sent to counter 1108 as a preset value. Counter 1110 will function at 1/4 minute cycles. As a result, the 50 MHz signals of oscillator 661 will operate at 1/4 minute intervals and 12.5 MHz clock signal INCLK will be output from D type flip flop number 3 (1104).

In the examples provided above, the operating frequency was reduced by one half in the sleep mode. However, when the characteristics of microprocessor 601 permit, the operating frequency may reduced even further. The operating frequency may even be reduced to zero (that is, stopping the clock).

Also, the standards for entering the sleep mode (microprocessor 601 not receiving new print data from electronic control circuit 501 for a specified amount of time) may be standards other than those described above. For example, the determining standard could be RAMs 611 to 614 not being accessed for a specified amount of time. The component that detects that microprocessor 601 has not operated for a specified amount of time could be something other than microprocessor 601 itself. It can be a different detection.

In general, if the event that indicates that microprocessor 601 has not operated for a specified amount of time is detected and if the operating frequency is reduced in response to this detection, it is possible to reduce the heat generated by microprocessor 601 and other devices as well.

Also, when entering the sleep mode, it is often the case that the temperature of microprocessor 601 is not very high anyway because it has not been operating. However, in general, it is known that if semiconductor devices maintain relatively high temperatures over a long period of time, that will shorten their life span. As a result, it is possible to extend the life of the microprocessor by having it enter the sleep mode.

When a microprocessor operates for a long period of time or when the ambient temperature becomes high, it is also possible to measure the temperature of the microprocessors and other devices that generate a lot of heat with a temperature measuring device such as a thermal couple. When the temperature reaches a specified level, the operating frequency can be reduced to a specified level. This will prevent damage to the circuit devices.

(2) Above, the embodiments of this invention have been described using printer applications. However the application of this invention is not limited to printers. For example, it may also be applied to dedicated word processors, personal computers, or even work stations. In recent years, such computer related equipment not only has expansion slots, it is often the case that cartridge type expansion devices, such as IC cards, can be attached to them.

In the case of dedicated word processors and the personal computers, etc., that are equipped with expansion slots and IC cards, it can be easy to improve or to add to the data processing functions or to make modifications. It can be easy if the add-on control device of this invention is installed to one of these devices and a monitor command, etc., is used to convert the processing of the equipment processor to the processing stored in the memory built into the add-on control device of this invention so that the equipment processor processes data along with the processor provided with the add-on control device. Moreover, if control is switched to an add-on control device, no matter what the content of the processing, it can be modified. Therefore, it is possible to modify and improve the functions of equipment already sold as well as update the version of the software of a variety of dedicated equipment, such as dedicated word processors.

In this manner, this invention can be applied to all types of data processing equipment to which an add-on control device can be connected by means of a connector, such as all types of devices that use a processor, for example, electronic automobile parts, facsimile machines, telephones, electronic memos, electronic musical instruments, electronic cameras, electronic translation machines, handy copiers, cash dispensers, remote control devices and electronic calculators. In such data processing equipment, if the processor on the equipment side is equipped with a function that recognizes the add-on control device and easily switches its processing to the address provided for the add-on control device, it will be easy to use the add-on control device and data processing device, even if it is used on existing electronic devices. If the equipment does not have such functions, a variety of means can be devised that will switch the equipment side processor to the processing stored in the add-on control device.

When the 68000 type processor conducts processing to read data from a specified address, the equipment (slave) that outputs the data will determine whether or not the data is on the data bus by means of signal DTACK, which will give a response to the processor. For this reason, when the processor executes a jump command to an absolute address while executing the processing that is stored in the ROM provided on the equipment side, the add-on control device will conduct an analysis and detect that this was an execution of the jump command to the absolute address. It will then output the execution address of the ROM built into the add-on control device to the data bus before the original ROM located in the equipment side outputs the absolute address of the jump destination to the data bus.

It also will return signal DTACK to the equipment-side processor and force the processing to switch to that from the specified address in the add-on control device. Once the processing switches to the ROM in the add-on control device, the subsequent processing can take place in any configuration.

This example assumes that the processor on the equipment side will execute the jump command to the absolute address. However, it is also possible to have a configuration that sees the jump command itself being read from the ROM of the equipment side. When the power is turned on, and the instruction initially is read from the ROM, a code that is equivalent to a jump command from the add-on control device will be placed on the data bus and signal DTACK will be returned. Using these methods, the danger of a DTACK conflict exists. However, a detailed analysis of the bus timing will make it possible to realize them.

(3) In addition, in the embodiment described above, the add-on control device is configured as a cartridge that contains a printed circuit board in a casing and is handled as a single unit. However, it may also be a single printed circuit board that inserts in the expansion slot. Also, there is no problem with having a single add-on control device that has a number of connectors. Further, having the casing itself form the printed circuit board is another method of creating a mode of this invention.

(4) This invention is not limited in any manner by the embodiments described above. It is possible to implement this invention in a variety of forms that do not deviate from the gist of this invention. For example, there is the configuration in which a cartridge that has a built in outline font receives data on the number of character pointers from the printer and then generates a bit image of the designated number of points of that character and transfers that to the printer. There is the configuration that stores and displays, without performing especially intricate processing, by means of the data received from the electronic device using the add-on control device. Or, there is the configuration in which the printer is an ink jet printer.

Industrial Fields of Use

The add-on electronic device and electronic system of this invention can be applied to all types of equipment that uses a processor. For example, there are dedicated word processors, personal computers, work stations, electronic automobile parts, facsimile machines, telephones, electronic memos, electronic musical instruments, electronic cameras, electronic translation machines, handy copiers, cash dispensers, remote control devices and electronic calculators.

Drawings

Figure 18
519 Console panel I/F
514 Data input port
517 Register
515 Line buffer
Figure 22
601 Microprocessor
Figure 27
Data transfer processing routine to cartridge
S700 Read status register flag EWRDY.
S710 Process to read the address (first address of EWWRH plus data to be transferred Dx2).
S715 Process to read the address (first address of EWWRL plus data to be transferred Dx2).
S720 Set one of the interrupt request registers (AMDINT0).
Figure 29
Data read interrupt processing routine.
S730 Read register EWRD.
S735 Transfer to specified RAM area.
Figure 30
FIFO data transfer processing routine
S750 Read register FIFORST and reset the write address counter.
S760 Reset (lead address of FIFOWR and data to be transferred Dx2).
S765 Read register FIFOREQ and transfer data D.
S780 Set one of the interrupt request registers (AMDINT1).
Figure 31

29

FIFO data receive interrupt routine

S800 Read register RDRST and reset read address counter

S810 Read register FIRCLK.

S815 Transfer to the specified RAM area.

S830 Write the command that indicates reading has ended to the polling command register.

Figure 33

Image data transfer start processing routine

S850 Set the command that starts transfer into the polling command register.

Figure 34

Response processing routine

S860 Print?

S865 Set one of the interrupt request registers (AMDINT2)

S870 Notification processing.

Figure 35

Image data transfer interrupt processing routine

S900 Write a 0 to bit d0 of register ADDMUXA.

S902 Transfer 16-word data to bank A DPWROA.

S904 Write a 1 to bit d0 of register ADDMUXA.

S906 Write to the polling command register the command data that gives notice that the transfer to bank A has ended.

S910 Execute the above processing for bank B.

Figure 36

Image data receive processing routine

S920 Read bit d3 (flag CMDRD) of the status register.

S930 Read the command data of the polling command register.

S935 Has bank A transfer ended?

S940 Other processing.

S945 Read the 16 words of bank A DPRAMA.

S950 Transfer it to the RAM.

S955 Set one of the interrupt request registers (AMDINT2).

S960 Do the same processing for bank B.

Figure 37

Signals from the electronic control device

Print     On   Off

On   Off

Signal from the laser engine

Paper transport motor      On   Off

On   Off

Bottom end of paper detected.

Read from the double buffer circuit

Top margin

Bottom margin

## Claims

1. An add-on electronic device that is inserted through a designated opening into a electronic device which is comprised of processor number 1, which is capable of performing logical operations, memory means number 1, which stores the processing executed by the said processor, a connector that connects at least the address signal line of the aforementioned processor, and an address output means that converts data to be transferred to the outside into address signals and outputs the said address signals through the aforementioned connector; said add-on electronic device comprising processor number 2, which performs processing that is completely different from that of processor number 1, memory means number 2, which store the processing steps that processor number 2 will

30

execute, and a data removal means that removes data reflected in the said address and the address signals that were output from the aforementioned electronic device; wherein the add-on electronic device is configured such that the circuit devices that generate the most heat within the add-on electronic device are located between the approximate center and rear end of the add-on electronic device in the direction in which the add-on electronic device will be inserted.

2. The add-on electronic device described in claim 1, in which the aforementioned circuit devices that generate the most heat includes the add-on electronic device that contains the aforementioned processor number 2.

3. The add-on electronic device described in claim 1, which is equipped with a printed circuit board inside of which is located the circuit devices of the add-on electronic device.

4. The add-on electronic device described in claim 3, which is equipped with a casing that contains the circuit devices and the aforementioned printed circuit board of the aforementioned add-on electronic device.

5. The add-on electronic device described in claim 4, in which at least one surface of the aforementioned casing is made of metal.

6. The add-on electronic device described in claim 5, in which the entire aforementioned casing is made of metal.

7. The add-on electronic device described in claim 4, in which the aforementioned casing of the add-on electronic device is made of a material that has a thermal conductance rate of 1W/m • K or more.

8. The add-on electronic device described in claim 7, which possesses a metal heat dissipating component that is located on the top surface of the aforementioned processor number 2.

9. The add-on electronic device described in claim 4, which is equipped with a packing component that adheres tightly to the aforementioned processor number 2 and the aforementioned casing.

10. The add-on electronic device described in claim 8, which is equipped with an insertion component that is placed between the top surface of aforementioned processor number 2 and the heat dissipating component and adheres firmly to aforementioned processor number 2 and the aforementioned heat dissipating component.

11. The add-on electronic device described in claim 9 or claim 10, in which the aforementioned insertion material is a rubber-like substance.

12. The add-on electronic device described in claim 9 or claim 10, in which the aforementioned insertion material is a liquid-like substance.

13. The add-on electronic device described in claim 4, which is equipped with an elastic component for pushing the aforementioned processor number 2 in the direction of the aforementioned casing, which is opposite of the top surface of processor number 2.

14. The add-on electronic device described in claim 13, in which the aforementioned elastic material passes through an opening made in the aforementioned printed circuit board and is installed between the bottom surface of the aforementioned processor number 2 and the aforementioned casing.

15. The add-on electronic device described in claim 13 or 14, in which the elastic component is made of silicon rubber.

16. The add-on electronic device described in claim 4, in which an opening has been made in at least the part of the aforementioned casing and is opposite the aforementioned processor number 2.

**17.** The add-on electronic device described in claim 4, in which the aforementioned casing is made of plastic and at least an opening has been made in the part of the casing that is opposite the aforementioned processor number 2.

**18.** The add-on electronic device described in claim 4, in which the aforementioned printed circuit board is placed inside of the aforementioned casing in such a way that it divides the space within the aforementioned casing into a relatively large space number 1 and a relatively small space number 2, and in which processor number 2 is placed on the side of space number 1.

**19.** The add-on electronic device described in claim 1, which is comprised of an oscillating circuit that sends a clock signal to a specified circuit device inside of the add-on electronic device, and comprised of a frequency regulating circuit that detects that the aforementioned circuit device has not operated for a specified amount of time and regulates the frequency of the aforementioned clock signals based on this detection.

**20.** The add-on electronic device described in claim 19, in which the aforementioned processor number 1 detects that the aforementioned specified circuit device has not operated in a specified amount of time and notifies the aforementioned frequency regulating circuit of this, and in which the aforementioned frequency adjusting clock adjusts the frequency of the aforementioned clock signal based on this notification.

**21.** The add-on electronic device described in claim 19, in which the aforementioned processor number 2 detects that the aforementioned specified circuit device has not operated in a specified amount of time, notifies the aforementioned frequency regulating circuit of this and in which the aforementioned frequency adjusting clock adjusts the frequency of the aforementioned clock signal according to this notification.

**22.** The add-on electronic device described in any of claims 19 through 21, in which the specified circuit device includes the aforementioned microprocessor number 2.

**23.** The add-on electronic device described in any of claims 19 through 21, in which the aforementioned frequency adjusting circuit is equipped with a circuit that reduces the specified frequency level of the aforementioned clock signal.

**24.** The add-on electronic device described in any of claims 19 through 21, in which the aforementioned frequency adjusting circuit is equipped with a circuit that reduces the frequency of the aforementioned clock signal to zero.

**25.** An electronic system that is comprised of the add-on electronic device described in claim 1 and the aforementioned electronic device.

*FIG._1*

FIG._2A

FIG._2B

34

FIG._3A

FIG._3B

FIG._3C

FIG._3D

**FIG._4**

**FIG._5**

**FIG._6A**

**FIG._6B**

*FIG._7*

*FIG._8*

FIG._9

FIG._10

EP 0 604 650 A1

503

601

1B

**FIG._11**

*FIG._12A*

*FIG._12B*

FIG._13

FIG._14

FIG._15A

FIG._15B

OP

110

101

102

11.5

7.5

550

601

121

EP 0 604 650 A1

*FIG._16*

*134*

*136*

*104* *102* *100*

*601*

*550*

*120*

*126*

*FIG._17*

**FIG._18**

CN11

550

| | | A | B | |
|---|---|---|---|---|
| /ASB | 1 | /ASB | /UDS | 1 | /UDS |
| /LDS | 2 | /LDS | /ADS | 2 | /ADS |
| /ODTACK | 3 | /ODTACK | /DTACK | 3 | |
| /CTRGSEL | 4 | /CTRGSEL | A1 | 4 | A1 |
| A2 | 5 | A2 | A3 | 5 | A3 |
| A4 | 6 | A4 | A5 | 6 | A5 |
| A6 | 7 | A6 | A7 | 7 | A7 |
| A8 | 8 | A8 | A9 | 8 | A9 |
| A10 | 9 | A10 | A11 | 9 | A11 |
| A12 | 10 | A12 | A13 | 10 | A13 |
| A14 | 11 | A14 | A15 | 11 | A15 |
| A16 | 12 | A16 | A17 | 12 | A17 |
| A18 | 13 | A18 | A19 | 13 | A19 |
| A20 | 14 | A20 | D0 | 14 | D0 |
| D1 | 15 | D1 | D2 | 15 | D2 |
| D3 | 16 | D3 | D4 | 16 | D4 |
| D5 | 17 | D5 | D6 | 17 | D6 |
| D7 | 18 | D7 | D8 | 18 | D8 |
| D9 | 19 | D9 | D10 | 19 | D10 |
| D11 | 20 | D11 | D12 | 20 | D12 |
| D13 | 21 | D13 | D14 | 21 | D14 |
| | 22 | GND | D15 | 22 | D15 |
| | 23 | GND | R/W | 23 | R/W |
| +5V | 24 | VCC | /CTRGS | 24 | |
| | 25 | VCC | SCLK | 25 | SCLK |

*FIG._19*

D15
D0

| — | — | | — | — | — | — | d6 | d5 | — | d3 | d2 | d1 | d0 |

EWRDY
ADDMUXA
ADDMUXB
CMDRD
CLKDIV
AMDON

*FIG._25*

45

| | |
|---|---|
| ROM (128K byte) | X00000 h) |
| EWWRL | X20000 h) |
| — | X20200 h) |
| EWWRH | X30000 h) |
| — | X30200 h) |
| DPRAMA (32 byte) | X40000 h) |
| — | X40020 h) |
| DPRAMB (32 byte) | X50000 h) |
| — | X50020 h) |
| AMDINT0 | X60000 h) |
| AMDINT1 | X60004 h) |
| AMDINT2 | X60008 h) |
| — | X6000C h) |
| POLL | X70000 h) |
| | X80000 h) |
| | X90000 h) |
| | X90002 h) |
| — | X90004 h) |
| STATUS | XA0000 h) |
| — | XB0000 h) |
| FIFOREQ | (X+1) 00000 h) |
| FIFORST | (X+1) 10000 h) |
| FIFOWR | (X+1) 20000 h) |
| — | (X+1) 20200 h) |
| | (X+1) FFFFF h) |

000000 h)
200000 h)
400000 h)   ROM CARTRIDGE 1
600000 h)   ROM CARTRIDGE 2

FFFFFF h)

000000 h)

400000 h)   ROM CARTRIDGE
600000 h)

FFFFFF h)

640
643
645

000000 h)

400000 h)   ROM CARTRIDGE 1
600000 h)
800000 h)   ROM CARTRIDGE 2
FFFFFF h)

## FIG._20

46

| | READ | WRITE | 80000000 h) |
|---|---|---|---|
| | | ADDMUXA | 80000004 h) |
| | | ADDMUXB | 80000008 h) |
| | | CLKDIV | 8000000C h) |
| | EWRD | RTCVAL | 80000010 h) |
| | | RTCON | 80000014 h) |
| | | RTCSEL | 80000018 h) |
| | | — | 8000001C h) |
| | | AMDON | 80000100 h) |
| | | RDCLK | 80000104 h) |
| | | FIFORD | 80000108 h) |
| | FIRCLK | RDRST | 8000010C h) |
| | | EEPCS | 80000110 h) |
| | | EEPSK | 80000114 h) |
| | | EEPDI | 80000200 h) |
| | BPOLL | MCONTCS | 80000300 h) |
| | — | DPWROA | 80000340 h) |
| | — | — | 80000400 h) |
| | AMDCLR0 | | 80000404 h) |
| | AMDCLR1 | DPWROB | 80000408 h) |
| | AMDCLR2 | | 8000040C h) |
| | — | | 80000440 h) |
| | — | — | 80000500 h) |
| | RTCCLR | — | 80000700 h) |
| | — | — | 80000800 h) |

643

647

640

| | |
|---|---|
| 00000000 h) | ROM |
| 20000000 h) | DRAM |
| 20200000 h) | DRAM(EXPANSION) |
| 20400000 h) | — |
| 80000000 h) | I/O |
| A0000000 h) | — |
| FFFFFFFF h) | |

*FIG._21*

FIG._22

EP 0 604 650 A1

FIG._23A

FIG._23B

FIG._23C

FIG._24

FIG._26

## FIG._27

```
PROCESS ROUTINE
FOR DATA TRANSFER TO
CARTRIDGE
        │
        ▼
  ┌─────────────────────┐  ── S700
  │ READ FLAG EWRDY     │
  │ OF STATUS REGISTER  │
  └─────────────────────┘
        │
        ▼
        ◇  ── S705
  NO ◇ EWRDY = 1 ◇
  ◇     ?      ◇
        │ YES
        ▼
  ┌─────────────────────┐  ── S710
  │ READ ADDRESS        │
  │ (EWWRH TOP ADDRESS  │
  │ + DATA D x 2 TO BE  │
  │ TRANSFERRED)        │
  └─────────────────────┘
        │
        ▼
  ┌─────────────────────┐  ── S715
  │ READ ADDRESS        │
  │ (EWWRL TOP ADDRESS  │
  │ + DATA D x 2 TO BE  │
  │ TRANSFERRED)        │
  └─────────────────────┘
        │
        ▼
  ┌─────────────────────┐  ── S720
  │ SET ONE INTERRUPT   │
  │ REQUEST REGISTER    │
  │ (AMDINT0)           │
  └─────────────────────┘
        │
        ▼
      NEXT
```

*FIG._27*

## FIG._28

| EWWRH TOP ADDRESS | 8 bit |
|---|---|
| + 0 | 0 0 h |
| + 0 1 | 0 0 h |
| + 0 2 | 0 1 h |
| + 0 3 | 0 0 h |
| + 0 4 | 0 2 h |
| : | • |
| + 62 | 3 1 h |
| + 63 | 0 0 h |
| + 64 | 3 2 h |
| + 65 | 0 0 h |
| + 66 | 3 3 h |

*FIG._28*

## FIG._29

```
DATA READ INTERRUPT
PROCESS ROUTINE
        │
        ▼
S730  ┌─────────────────────┐
      │ READ                │
      │ REGISTER EWRD       │
      └─────────────────────┘
        │
        ▼
S735  ┌─────────────────────┐
      │ TRANSFER TO         │
      │ PRESCRIBED RAM AREA │
      └─────────────────────┘
        │
        ▼
       R T N
```

*FIG._29*

FIFO DATA TRANSFER
PROCESSING ROUTINE

**S750**
READ REGISTER
FIFORST AND
RESET WRITE
ADDRESS COUNTER

**S755**
N ← O

**S760**
READ (FIFOWR TOP
ADDRESS + DATA D x 2
TO BE TRANSFERRED)

**S765**
READ REGISTER
FIFOREQ AND
TRANSFER DATA D

**S770**
N ← N +1

**S775**
N = X ?
NO
YES

**S780**
SET ONE INTERRUPT
REQUEST REGISTER
(AMDINT1)

NEXT

*FIG._30*

FIFO DATA RECEIVE
INTERRUPT ROUTINE

**S800**
READ REGISTER
RDRST AND
RESET READ
ADDRESS COUNTER

**S805**
M ← O

**S810**
READ REGISTER
FIRCLK

**S815**
TRANSFER TO
PRESCRIBED RAM AREA

**S820**
M ← M +1

**S825**
M = X ?
NO
YES

**S830**
WRITE COMMAND
INDICATING COMPLETION
OF READING TO POLLING
COMMAND REGISTER

RTN

*FIG._31*

FIG._32

TRANSFER START PROCESS
ROUTINE FOR IMAGE DATA

S850

SET TRANSFER
COMMAND IN POLLING
COMMAND REGISTER

END

*FIG._33*

RESPONSE PROCESS
ROUTINE

S860

PRINT
?

NO

YES

S865

SET ONE INTERRUPT
REQUEST REGISTER
(AMDINT2)

S870

NOTIFICATION

NEXT

*FIG._34*

IMAGE DATA TRANSFER
INTERRUPT PROCESS ROUTINE

S900
WRITE LEVEL 0 TO BIT d0
IN REGISTER ADDMUXA

S902
TRANSFER 16-WORD
DATA TO A BANK
DPWROA

S904
WRITE LEVEL 1 TO
BIT d0 OF REGISTER
ADDMUXA

S906
WRITE COMMAND DATA
TO POLLING COMMAND
REGISTER THAT NOTIFIES
OF COMPLETION OF
TRANSFER TO A BANK

S910
EXECUTE ABOVE
PROCESSING
FOR B BANK

RTN

FIG._35

55

IMAGE DATA RECEIVE
PROCESS ROUTINE

S920
READ BIT d3
(FLAG CMDRD) OF
STATUS REGISTER

S925
CMDRD = 0
?

NO

YES

S930
READ COMMAND DATA
IN POLLING COMMAND
REGISTER

S935
IS
A BANK
TRANSFER
COMPLETE
?

NO → S940
OTHER
PROCESSING

YES

S945
READ 16 WORDS
OF A BANK DPRAMA

S950
TRANSFER
TO RAM

S955
SET ONE INTERRUPT
REQUEST REGISTER
(AMDINT 2)

S960
EXECUTE SAME
PROCESSING FOR
B BANK

NEXT

*FIG._36*

56

FIG._37

SIGNALS FROM ELECTRONIC CONTROL DEVICE

PRINTER — ON / OFF

VSYNC — ON / OFF

SIGNALS FROM LASER ENGINE

PAPER TRANSPORT MOTOR — ON / OFF

DETECT PAPER LEADING EDGE

DETECT PAPER TRAILING EDGE

VREQ

HSYNC — ON / OFF

READ FROM DOUBLE-BUFFER CIRCUIT

TOP MARGIN

BOTTOM MARGIN

EP 0 604 650 A1

FIG._38

EP 0 604 650 A1

# INTERNATIONAL SEARCH REPORT

International Application No PCT/JP92/00228

## I. CLASSIFICATION OF SUBJECT MATTER (if several classification symbols apply, indicate all) [6]

According to International Patent Classification (IPC) or to both National Classification and IPC

Int. Cl$^5$  B41J29/00, 29/38, G06F3/12, G06K17/00

## II. FIELDS SEARCHED

### Minimum Documentation Searched [7]

| Classification System | Classification Symbols |
|---|---|
| IPC | B41J29/00, 29/38, 5/44, 5/48, 5/50, G06F3/12, G06K17/00 |

### Documentation Searched other than Minimum Documentation to the Extent that such Documents are Included in the Fields Searched [8]

| | |
|---|---|
| Jitsuyo Shinan Koho | 1920 - 1991 |
| Kokai Jitsuyo Shinan Koho | 1971 - 1991 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 62-1181 (Ricoh Co., Ltd.), January 7, 1987 (07. 01. 87), & US, A, 4784906 & DE, A1, 3630978 | 1-4, 25 |
| Y | JP, A, 3-22160 (Fuji Electric Co., Ltd. and another), January 30, 1991 (30. 01. 91), (Family: none) | 1-3, 25 |
| Y | JP, A, 2-253289 (Canon Inc.), October 12, 1990 (12. 10. 90), (Family: none) | 1, 16-18 |
| Y | JP, A, 53-91375 (Hitachi, Ltd.), August 11, 1978 (11. 08. 78), & JP, B2, 59-15399 | 1, 18 |
| Y | JP, A, 61-222763 (Seiko Epson Corp.), October 3, 1986 (03. 10. 86), & FR, A1, 2566327 & DE, A1, 3521723 & GB, A, 2161005 & GB, B, 2161005 & US, A, 4826332 & FR, B1, 2566327 & DE, C3, 3521723 | 1-4, 18, 25 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 10, 1992 (10. 04. 92) | April 28, 1992 (28. 04. 92) |

| International Searching Authority | Signature of Authorized Officer |
|---|---|
| Japanese Patent Office | |

Form PCT/ISA/210 (second sheet) (January 1985)

| | FURTHER INFORMATION CONTINUED FROM THE SECOND SHEET | |
|---|---|---|
| Y | JP, A, 2-119299 (Mitsubishi Electric Corp.), May 7, 1990 (07. 05. 90), (Family: none) | 5-7 |
| Y | JP, A, 1-165415 (Mitsubishi Densen Kogyo K.K.), June 29, 1989 (29. 06. 89), (Family: none) | 5 |
| Y | JP, A, 63-119554 (NEC Corp.), May 24, 1988 (24. 05. 88), & EP, A2, 236065 & EP, A3, 236065 & US, A, 4781244 | 8, 9, 10, 11 |

**V.☐ OBSERVATIONS WHERE CERTAIN CLAIMS WERE FOUND UNSEARCHABLE ¹**

This international search report has not been established in respect of certain claims under Article 17(2) (a) for the following reasons:

1.☐ Claim numbers        . because they relate to subject matter not required to be searched by this Authority, namely:

2.☐ Claim numbers        , because they relate to parts of the international application that do not comply with the prescribed requirements to such an extent that no meaningful international search can be carried out, specifically:

3.☐ Claim numbers        , because they are dependent claims and are not drafted in accordance with the second and third sentences of PCT Rule 6.4(a).

**VI.☐ OBSERVATIONS WHERE UNITY OF INVENTION IS LACKING ²**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

| | | |
|---|---|---|
| **FURTHER INFORMATION CONTINUED FROM THE SECOND SHEET** | | |
| Y | JP, A, 2-66962 (Mitsui Petrochemical Industries, Ltd.), March 7, 1990 (07. 03. 90), (Family: none) | 9, 10, 11, 13, 14, 15 |
| Y | JP, A, 63-278261 (NEC Corp.), November 15, 1988 (15. 11. 88), (Family: none) | 8, 9, 10, 11 |
| Y | JP, A, 1-298753 (NEC Corp.), December 1, 1989 (01. 12. 89), (Family: none) | 8, 9, 10, 12 |
| Y | JP, A, 60-254641 (Fujitsu Ltd.), | 8, 9, 10, 12 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers , because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

| FURTHER INFORMATION CONTINUED FROM THE SECOND SHEET | | |
|---|---|---|
| | December 16, 1985 (16. 12. 85), (Family: none) | |
| Y | JP, A, 63-50096 (Fanuc Ltd.), March 2, 1988 (02. 03. 88), (Family: none) | 17 |
| Y | JP, U, 3-6724 (Ricoh Co., Ltd.), January 23, 1991 (23. 01. 91), (Family: none) | 19-23 |
| Y | JP, A, 3-11409 (Oki Electric Industry Co., Ltd.), January 18, 1991 (18. 01. 91), (Family: none) | 24 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers        , because they relate to subject matter not required to be searched by this Authority, namely:

2.☐ Claim numbers        , because they relate to parts of the international application that do not comply with the prescribed requirements to such an extent that no meaningful international search can be carried out, specifically:

3.☐ Claim numbers        , because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)